# EUROPEAN PATENT SPECIFICATION

(11) **EP 4 410 571 B1**
(45) Date of publication and mention of the grant of the patent: **01.07.2026**
(21) Application number: 22915197.2
(22) Date of filing: 30.12.2022
(51) Int. Cl.: B60G 17/08, F15B 1/02, F16F 9/10

(54) **HYDRAULIC SUSPENSION APPARATUS, HYDRAULIC SUSPENSION SYSTEM HAVING SAME, AND VEHICLE**
HYDRAULISCHE AUFHÄNGUNGSVORRICHTUNG, HYDRAULISCHES AUFHÄNGUNGSSYSTEM DAMIT UND FAHRZEUG
APPAREIL DE SUSPENSION HYDRAULIQUE, SYSTÈME DE SUSPENSION HYDRAULIQUE LE COMPRENANT, ET VÉHICULE

(30) Priority: 30.12.2021 CN 202111655945
(43) Date of publication of application: 07.08.2024
(73) Proprietor: BYD Company Limited, Shenzhen, Guangdong 518118 (CN)
(72) Inventor: LIAN, Yubo, Shenzhen, Guangdong 518118 (CN); LIAO, Yinsheng, Shenzhen, Guangdong 518118 (CN); XU, Haolun, Shenzhen, Guangdong 518118 (CN); ZHANG, Hongzhou, Shenzhen, Guangdong 518118 (CN); HUANG, Taishuo, Shenzhen, Guangdong 518118 (CN)
(74) Representative: Dehns Germany Partnerschaft mbB
(86) International application number: PCT/CN2022/143998
(87) International publication number: WO 2023/125949

(56) References cited:
- EP-A1- 0 495 442
- CN-A- 101 612 872
- CN-A- 104 442 262
- CN-A- 110 541 861
- JP-A- 2007 161 077
- JP-A- 2008 247 209
- JP-A- H1 086 624
- US-A1- 2018 229 574

## Description

### FIELD

The present invention relates to the field of vehicles, and more specifically, to a hydraulic suspension apparatus and a hydraulic suspension system and a vehicle having same.

### BACKGROUND

A suspension is an apparatus that transfers forces between a vehicle body and an axle, is one of the four major parts of a car, and is a key part that affects the driving performance of the car. The suspension may transfer a force and a torque that are fed back by a road surface, attenuate the vibration of wheels, and cushion an impact, to improve the driving experience of a driver, thereby providing a vehicle with optimal motion characteristics and stable driving capability. A suspension in the related art is mostly formed by a spring, a guide mechanism, a reducer, and the like. Both a damping coefficient of the reducer and stiffness of the spring are fixed, and it is difficult to balance comfort and operational stability. Documents US 2018/229574 A1 and JP 2008 247209 A relate to suspension apparatuses for vehicles. US 2018/229574 A1 discloses a valve control device configured to execute a specific valve control when a valve switching condition at high pressure is satisfied. The specific valve control switches the spring constant change valves for front wheel to a blocking state and switches a spring constant change valves for rear wheel to a communication permission state. The valve switching condition at high pressure is satisfied when oil pressure of hydraulic oil of rear wheel side oil hydraulic cylinders, which is detected by rear wheel side oil pressure detection means, is more than or equal to a predetermined oil pressure threshold and the traveling state determination means determines that a vehicle is in a predetermined traveling state. JP 2008 247209 describes a vehicle height control device that controls a vehicle height using a fluid. When a request to increase the vehicle height is detected, the accumulator is released to open a vehicle height control valve on the higher front wheel side. The hydraulic liquid of the accumulator is supplied only to a suspension cylinder on the front wheel side. If a priority time has passed, the vehicle height control valves of all of four wheels are switched to open, and the hydraulic liquids are supplied into the suspension cylinders of all of the four wheels. When a wheel reaches a control finishing threshold value, the vehicle height control valve is closed. The fluid pressure of the accumulator is preferentially supplied to the suspension cylinder having higher fluid pressure at the time of the starting of vehicle height control, so that the fluid pressure of the accumulator can be effectively used, and the time required for controlling the vehicle height can be shortened.

### SUMMARY

The present invention is intended to resolve one of technical problems existing in the related art at least to a certain extent.

For this, an objective of the present invention is to provide a hydraulic suspension apparatus, as defined in the appended claims, so that the operational stability of a vehicle can be improved without damaging the comfort of the vehicle.

The present invention further provides a hydraulic suspension system having the foregoing hydraulic suspension apparatus.

The present invention further provides a vehicle having the foregoing hydraulic suspension system.

A hydraulic suspension apparatus according to the present invention is configured to adjust a height of a vehicle body of a vehicle. The hydraulic suspension apparatus includes a liquid storage apparatus and a reducer. The liquid storage apparatus is suitable for being arranged on a vehicle body and is configured to store oil. The reducer has a reducer housing, a piston, and a piston rod. The reducer housing is suitable for being connected to an axle. The piston is located in the reducer housing and fits the reducer housing to define an upper chamber and a lower chamber. An end of the piston rod is connected to the piston. The piston rod is suitable for being connected to the vehicle body. An oil channel is provided in the piston rod. The oil channel is communicated with the lower chamber and the liquid storage apparatus, to make oil flowable between the liquid storage apparatus and the lower chamber. The hydraulic suspension apparatus further includes an accumulator module, the oil channel is communicated with the liquid storage apparatus through a communicating channel, the accumulator module is communicated with the communicating channel, and the accumulator module is suitable for at least adjusting at least one of damping and stiffness of the reducer and the height of the vehicle body of the vehicle. The accumulator module includes a first accumulator and an openness adjustment valve, the first accumulator is communicated with the communicating channel at a first communicating point, the openness adjustment valve is arranged between the first communicating point and the oil channel, the openness adjustment valve is configured to adjust openness of a communicating channel between the oil channel and the first communicating point, to adjust the damping of the reducer, and the openness adjustment valve is further configured to close a communicating channel between the oil channel and the first communicating point, to adjust the stiffness of the reducer. The accumulator module further includes a second accumulator and a stiffness adjustment valve, a second communicating point communicated with the second accumulator is arranged on the communicating channel, the stiffness adjustment valve is arranged between the second accumulator and the second communicating point, and the stiffness adjustment valve is configured to communicate or separate the communicating channel and the second accumulator to adjust the stiffness of the reducer. A second control valve is further arranged between the second communicating point and the oil channel.

According to the hydraulic suspension apparatus in a first non-claimed example, an oil path can be stably communicated, wear or the like at a joint due to vibration is avoided, and liquid leakage at a joint can be avoided as much as possible. In addition, the weight can be reduced by using the hollow piston rod, and the oil channel defined by the hollow piston rod is further used to implement intake or discharge of oil to adjust the position of the piston rod. The adjustment manner is simple, the reliability is high, the costs are low, and the response speed is fast. Further, a height of a vehicle body may be adjusted, and the operational stability of a vehicle can be improved without damaging the comfort of the vehicle, so that the contradiction between the comfort and the steering stability of the vehicle is effectively resolved.

In an embodiment of the present invention, the liquid storage apparatus includes a control pump and a liquid storage device, and the control pump is arranged between the liquid storage device and the oil channel.

In an embodiment of the present invention, an upper end of the piston rod extends out of the reducer housing, an oil port is formed at the upper end of the piston rod, and the oil port is configured to communicate the oil channel and the liquid storage apparatus.

In an embodiment of the present invention, the hydraulic suspension apparatus further includes an oil outlet channel and an oil return channel, the oil outlet channel and the oil return channel are both communicated between the liquid storage device and the oil channel, the oil outlet channel and the oil return channel partially overlap, and the control pump is arranged on the oil outlet channel.

In an embodiment of the present invention, the oil outlet channel includes a shared channel and an oil outlet branch, the oil return channel includes the shared channel and an oil return branch, one end of the shared channel is communicated with the oil channel, and the oil outlet branch and the oil return branch are both communicated with the other end of the shared channel.

In an embodiment of the present invention, a one-way valve and the control pump are arranged on the oil outlet branch, one end of the one-way valve is communicated with the shared channel, the other end of the one-way valve is communicated with the control pump, and an oil return valve is arranged on the oil return branch.

In an embodiment of the present invention, the hydraulic suspension system further includes a first control valve, and the first control valve is arranged on the communicating channel, and is configured to control communication or separation between the liquid storage apparatus and the accumulator module.

A hydraulic suspension system according to embodiments of the present invention includes a controller and the hydraulic suspension apparatus in any foregoing embodiment of the present invention. The controller is configured to control a flow direction of oil between the liquid storage apparatus and the reducer according to a status of a vehicle, to increase or reduce a height of a vehicle body of the vehicle.

The hydraulic suspension system according to the embodiments of the present invention may adjust a height of a vehicle body, and can improve the operational stability of a vehicle without damaging the comfort of the vehicle, so that the contradiction between the comfort and the steering stability of the vehicle is effectively resolved. In addition, the weight can be reduced by using the hollow piston rod, and the oil channel defined by the hollow piston rod is further used to implement intake or discharge of oil to adjust the position of the piston rod. The adjustment manner is simple, the reliability is high, the costs are low, and the response speed is fast. Further, the oil channel communicated with the lower chamber is opened at the piston rod, and the oil channel is communicated with the liquid storage apparatus. Therefore, an oil path can be stably communicated, wear or the like at a joint due to vibration is avoided, and liquid leakage at a joint can be avoided as much as possible.

A vehicle according to embodiments of the present invention includes the hydraulic suspension system according to the foregoing embodiments of the present invention.

The vehicle according to the embodiments of the present invention may adjust a height of a vehicle body, and can improve the operational stability of a vehicle without damaging the comfort of the vehicle, so that the contradiction between the comfort and the steering stability of the vehicle is effectively resolved. In addition, the weight can be reduced by using the hollow piston rod, and the oil channel defined by the hollow piston rod is further used to implement intake or discharge of oil to adjust the position of the piston rod. The adjustment manner is simple, the reliability is high, the costs are low, and the response speed is fast. Further, the oil channel communicated with the lower chamber is opened at the piston rod, and the oil channel is communicated with the liquid storage apparatus. Therefore, an oil path can be stably communicated, wear or the like at a joint due to vibration is avoided, and liquid leakage at a joint can be avoided as much as possible.

The additional aspects and advantages of the present invention will be set forth in part in the description below, parts of which will become apparent from the description below, or will be understood by the practice of the present invention.

### BRIEF DESCRIPTION OF THE DRAWINGS

FIG. 1 is a schematic diagram of a hydraulic suspension system according to some embodiments of the present invention;
FIG. 2 is a schematic diagram of a hydraulic suspension system according to some other embodiments of the present invention;
FIG. 3 is a schematic diagram of a hydraulic suspension system according to some embodiments of the present invention, where the hydraulic suspension system has an anti-tip function;
FIG. 4 is a schematic diagram of the hydraulic suspension system shown in FIG. 3 in a pressurization mode;
FIG. 5 is a schematic diagram of the hydraulic suspension system shown in FIG. 3 in a lift mode;
FIG. 6 is a schematic diagram of the hydraulic suspension system shown in FIG. 3 in a height-reduction mode;
FIG. 7 is a schematic diagram of the hydraulic suspension system shown in FIG. 3 in a braking anti-dive and acceleration anti-lift mode;
FIG. 8 is a schematic diagram of the hydraulic suspension system shown in FIG. 3 in an anti-tip working condition;
FIG. 9 is a schematic diagram of a hydraulic suspension system according to some embodiments of the present invention, where the hydraulic suspension system has an anti-pitch mode;
FIG. 10 is a schematic diagram of a hydraulic suspension system according to some other non-claimed examples, where the hydraulic suspension system has an anti-pitch mode;
FIG. 11 is a schematic diagram of a hydraulic suspension system according to still some other non-claimed examples;
FIG. 12 is a schematic diagram of a hydraulic suspension system according to yet some other non-claimed examples;
FIG. 13 is a schematic diagram of the hydraulic suspension system shown in FIG. 12 in a pressurization mode;
FIG. 14 is a schematic diagram of the hydraulic suspension system shown in FIG. 12 in a lift mode;
FIG. 15 is a schematic diagram of the hydraulic suspension system shown in FIG. 12 in a height-keeping mode;
FIG. 16 is a schematic diagram of the hydraulic suspension system shown in FIG. 12 in a height-reduction mode;
FIG. 17 is a schematic diagram of the hydraulic suspension system shown in FIG. 12 in an anti-tip mode;
FIG. 18 is a schematic diagram of the hydraulic suspension system shown in FIG. 12 in an anti-pitch mode;
FIG. 19 is a schematic diagram of the hydraulic suspension system shown in FIG. 12 in an anti-tip mode and a height-keeping mode;
FIG. 20 and FIG. 21 are schematic diagrams of a hydraulic suspension system according to different embodiments of the present and according to non-claimed examples respectively;
FIG. 22 is a schematic diagram of a left-front side reducer assembly and a right-front side reducer assembly according to non-claimed example,
FIG. 23 is a cross-sectional view of the reducer assembly shown in FIG. 22;
FIG. 24 is a cross-sectional view of a central control;
FIG. 25 is a three-dimensional view of a central control cylinder; and
FIG. 26 is a schematic diagram of a metal bellows accumulator.

### DETAILED DESCRIPTION

The following describes embodiments of the present invention and non-claimed examples in detail. Examples of the embodiments and non-claimed examples are shown in the accompanying drawings, and same or similar reference signs in all the accompanying drawings indicate same or similar components or components having same or similar functions. The embodiments and non-claimed examples that are described with reference to the accompanying drawings are exemplary, and are used to interpret the present invention, instead limiting the present invention.

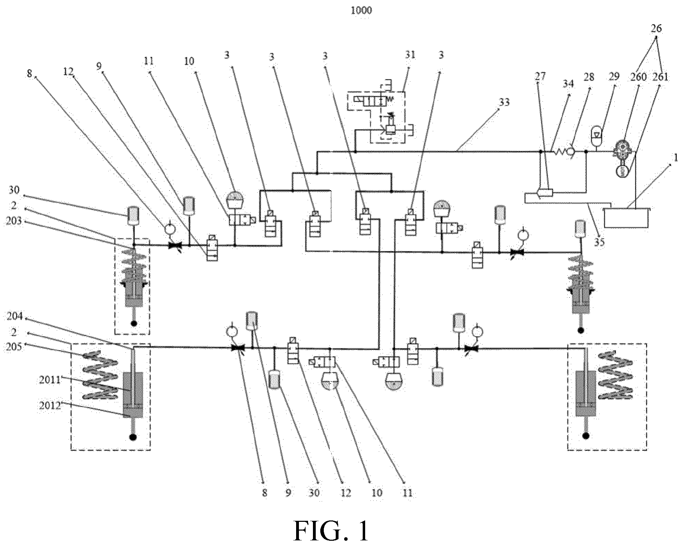

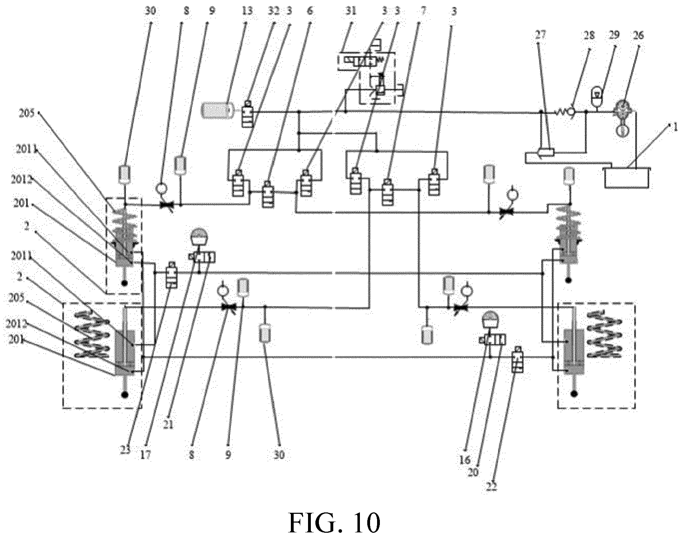

A hydraulic suspension apparatus according to embodiments of the present invention is described below with reference to Fig. 1 to 9 and 20 as well as according to non-claimed examples with reference to figure Fig. 10 to 19 and Fig. 21 - 26. The hydraulic suspension apparatus is used on a vehicle. The hydraulic suspension apparatus is configured to connect an axle and a vehicle body of the vehicle, and is configured to adjust a height of the vehicle body of the vehicle.

As shown in Fig. 1 to 9 and 20 according to the embodiments of the present invention and as shown in Fig. 10 to 19 and Fig. 21 - 23 according to the non-claimed examples, the hydraulic suspension apparatus includes a liquid storage apparatus and a reducer 200. The liquid storage apparatus is suitable for being arranged on the vehicle body and is configured to store oil. The reducer 200 has a reducer housing 201, a piston 202, and a piston rod 203. The reducer housing 201 is suitable for being connected to the axle. The piston 202 is located in the reducer housing 201 and fits the reducer housing 201 to define an upper chamber 2011 and a lower chamber 2012. An end of the piston rod 203 is connected to the piston 202. The piston rod 203 is suitable for being connected to the vehicle body. An oil channel 204 is provided in the piston rod 203. The oil channel 204 is communicated with the lower chamber 2012 and the liquid storage apparatus, to make oil flowable between the liquid storage apparatus and the lower chamber 2012.

It may be understood that, in a driving process of the vehicle, the axle vibrates, for example, shakes, relative to the vehicle body. When the hydraulic suspension apparatus according to the embodiments of the present invention is mounted on the vehicle, the reducer housing 201 is mounted on the axle, and the piston rod 203 is connected to the vehicle body. As can be learned, a top end of the piston rod 203 is stationary relative to the vehicle body, and the reducer housing 201 may move relative to the piston rod 203 along with the axle. Because the oil channel 204 of the piston rod 203 is communicated with the liquid storage apparatus through an oil path, the impact of the vibration of the axle on the communication of the oil path can be reduced, so that the oil path can be stably communicated, wear at a joint between the oil path and the liquid storage apparatus can be reduced, and wear at a joint between the oil path and the piston rod 203 is reduced.

It may further be understood that, oil in the liquid storage apparatus may enter the lower chamber 2012 through the oil channel 204. When the piston rod 203 moves downward to make a volume in the lower chamber 2012 decrease, oil in the lower chamber 2012 may be discharged to the liquid storage apparatus through the oil channel 204.

Specifically, the hydraulic suspension apparatus has a lift mode and a height reduction mode. In the lift mode, oil of the liquid storage apparatus may enter the oil channel 204. Hydraulic oil that enters the oil channel 204 flows into the lower chamber 2012, to enable hydraulic pressure in the lower chamber 2012 to increase to enable the piston 202 to move upward. The piston 202 moves upward to drive the piston rod 203 to move upward, to lift the vehicle body.

In the height reduction mode, the oil in the liquid storage apparatus no longer enters the oil channel. Oil in the reducer 200 may flow out of the oil channel 204 under the action of the gravity of the vehicle. The hydraulic pressure in the lower chamber 2012 of the reducer 200 decreases to enable the piston 202 to move downward. The piston 202 moves downward to drive the piston rod 203 to move downward, to drive the vehicle body to move downward, to reduce the height of the vehicle body.

In the driving process, the vehicle may encounter various road conditions. Once a suspension system of the vehicle in the related art is chosen, the suspension system cannot be adjusted in a driving process of a car. As a result, a conventional suspension can only ensure that the car reaches matching of optimal performance on a specific road and under a speed condition, and can only passively bear a force on the vehicle body by the ground. Parameters of the suspension cannot be changed according to different roads and vehicle speeds, and the force on the vehicle body by the ground cannot be actively controlled.

The hydraulic suspension apparatus according to the embodiments of the present invention may adjust the height of the vehicle body according to a road condition or the like. For example, on a relatively bumpy mountain road, the hydraulic suspension apparatus may enter the lift mode to raise the center of gravity of the vehicle, thereby improving the driving stability of the vehicle. When an impact of the vehicle body on a driving speed needs to be reduced, the hydraulic suspension apparatus may enter the height reduction mode to lower the center of gravity of the vehicle. Certainly, it may be understood that, the foregoing is only an exemplary description, and the height of the vehicle body may be adjusted according to an actual requirement in a driving process.

For the hydraulic suspension apparatus according to the embodiments of the present invention, the oil channel 204 communicated with the lower chamber 2012 is opened at the piston rod 203, and the oil channel 204 is communicated with the liquid storage apparatus. Therefore, an oil path can be stably communicated, wear or the like at a joint due to vibration is avoided, and liquid leakage at a joint can be avoided as much as possible. In addition, the weight can be reduced by using the hollow piston rod 203, and the oil channel 204 defined by the hollow piston rod 203 is further used to implement intake or discharge of oil to adjust the position of the piston rod 203. The adjustment manner is simple, the reliability is high, the costs are low, and the response speed is fast. Further, a height of a vehicle body may be adjusted, and the operational stability of a vehicle can be improved without damaging the comfort of the vehicle, so that the contradiction between the comfort and the steering stability of the vehicle is effectively resolved.

As shown in Fig. 1 to 9 and 20 according to the embodiments of the present invention and as shown in Fig. 10 to 19 and Fig. 21 - 23 according to the non-claimed examples, an upper end of the piston rod 203 extends out of the reducer housing 201. An oil port is formed at the upper end of the piston rod 203. The oil port is configured to communicate the oil channel 204 and the liquid storage apparatus. In this way, the oil port provided at the upper end of the piston rod 203 facilitates the communication between the oil path and the oil port, thereby improving mounting efficiency.

In some embodiments of the present invention, as shown in Fig. 1 to 9 and 20 and in some non-claimed examples as shown in Fig. 10 to 19 and 21, the liquid storage apparatus includes a control pump 26 and a liquid storage device 1. The control pump 26 is arranged between the liquid storage device 1 and the oil channel 204. Specifically, oil is stored in the liquid storage device 1. The control pump 26 may pump the oil in the liquid storage device 1 to the oil channel 204. In this way, through the arrangement of the control pump 26, a mounting position of the liquid storage device 1 is not restricted, and the position of the liquid storage device 1 may be appropriately arranged according to a space of the vehicle.

Optionally, the hydraulic suspension apparatus further includes an oil outlet channel and an oil return channel. The oil outlet channel and the oil return channel are both communicated between the liquid storage device 1 and the oil channel 204. The oil outlet channel and the oil return channel partially overlap. The control pump 26 is arranged on the oil outlet channel. That is, the oil in the liquid storage device 1 is discharged to the oil channel 204 through the oil outlet channel. The oil in the oil channel 204 is discharged to the liquid storage device 1 through the oil return channel. In this way, through the arrangement of the oil outlet channel and the oil return channel, independent oil discharge and oil return can be implemented, to ensure reliable liquid discharge and liquid return. Further, because the oil outlet channel and the oil return channel partially overlap, a quantity of connecting pipes can be reduced, to make the hydraulic suspension apparatus more compact.

In some specific examples of the present invention, as shown in Fig. 1 to 9 and 20 and in some non-claimed examples as shown in Fig. 10 to 19 and 21, the oil outlet channel includes a shared channel 33 and an oil outlet branch 34. The oil return channel includes the shared channel 33 and an oil return branch 35. One end of the shared channel 33 is communicated with the oil channel 204. The oil outlet branch 34 and the oil return branch 35 are both communicated with the other end of the shared channel 33. That is, an overlapping part between the oil outlet channel and the oil return channel is the shared channel 33. The oil outlet branch 34 is communicated with a liquid discharge port of the liquid storage device 1. The oil return branch 35 is communicated with a liquid inlet port of the liquid storage device 1. The control pump 26 is arranged on the oil outlet branch 34. In this way, the oil in the liquid storage device 1 may be discharged to the oil channel 204 through the oil outlet branch 34 and the shared channel 33. The oil in the oil channel 204 may be discharged back into the liquid storage device 1 through the shared channel 33 and the oil return branch 35. In this way, the reliability of liquid return and liquid discharge is ensured.

Optionally, as shown in FIG. 1 to FIG. 21, a one-way valve 28 and the control pump 26 are arranged on the oil outlet branch 34. One end of the one-way valve 28 is communicated with the shared channel 33. The other end of the one-way valve 28 is communicated with the control pump 26. An oil return valve 27 is arranged on the oil return branch 35. Specifically, the liquid storage device 1 has a liquid return channel and a liquid discharge channel that are independent. When liquid discharge is required, the control pump 26 is opened and the oil return valve 27 is in a closed state, and the control pump 26 guides oil to the oil channel 204 of the reducer 200. When liquid return is required, the control pump 26 is closed and the oil return valve 27 is opened, and oil that flows out of the oil channel 204 of the reducer 200 may flow to the liquid storage device 1 through the oil return valve 27. During liquid return, due to the presence of the one-way valve 28, oil can be effectively kept from flowing to the control pump 26, to prevent oil from flowing to the liquid discharge port through the control pump 26 when the control pump 26 encounters an accident. In this way, reliable liquid discharge and liquid return are ensured.

In some examples of the present invention, as shown in Fig. 1 to 9 and 20 and in some non-claimed examples as shown in Fig. 10 to 19 and 21, the control pump 26 includes a control valve body 260 and a drive motor 261. The drive motor 261 is electrically connected to a valve in the control valve body 260. The drive motor 261 rotates to control the valve to rotate to open or close the control pump 26. In this way, in a manner that the drive motor 261 fits the valve, the control pump 26 is opened or closed, so that relatively reliable running of the control pump 26 can be ensured, to reduce an impact of oil on opening or closing of the control pump 26.

According to some embodiments of the present invention, as shown in Fig. 1 to 9 and according to the non-claimed examples as shown in Fig. 10 to 12, the hydraulic suspension apparatus further includes a relief valve 31. The relief valve 31 is located at a discharge end port of the control pump 26. When pressure in the liquid discharge port of the control pump 26 reaches a specific threshold, the relief valve 31 is opened to release pressure. In this way, the hydraulic suspension apparatus is protected to be kept in a normal pressure range. It needs to be noted that, the working principle of the relief valve 31 is the related art, and details are not described herein.

In some embodiments of the present invention, as shown in Fig. 1 to 9 and 20 and in some non-claimed examples as shown in Fig. 10 to 19 and 21, the hydraulic suspension apparatus further includes a constant pressure accumulator 29. The constant pressure accumulator 29 is arranged at an outlet end of the control pump 26. In this way, the constant pressure accumulator 29 may stabilize the pressure and eliminate discharge fluctuations at the outlet end of the control pump 26.

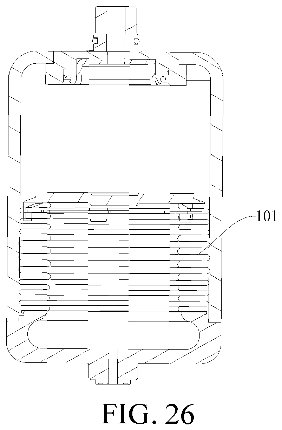

In a second non-claimed example, the constant pressure accumulator 29 may be a metal bellows accumulator. As shown in FIG. 26, the metal bellows accumulator is formed by a cylinder body assembly and a bellows assembly. The cylinder body assembly includes an upper cover, a seal ring, a cylinder, a clamp ring, and a seal loop. The bellows assembly includes a seal cover, a guide loop, bellows, and a lower cover. The metal bellows accumulator may replace a gas bag or a membrane. Metal bellows 101 are used as a flexible separation element between fluid and gas. The bellows may be used in a very wide temperature range. The metal bellows are welded to another part, and therefore are completely airtight. The metal bellows can move vertically inside the accumulator without generating any friction or wear, and only needs to be adjusted once before the metal bellows can run for a very long time.

In the embodiments of the present invention, the hydraulic suspension apparatus further includes an accumulator module. The oil channel 204 is communicated with the liquid storage apparatus through a communicating channel. The accumulator module is communicated with the communicating channel, and the accumulator module is suitable for at least adjusting at least one of damping and stiffness of the reducer 200 and the height of the vehicle body of the vehicle. It needs to be explained that the accumulator module implements energy storage. That is, oil may flow into the accumulator module for energy storage. When the hydraulic suspension apparatus needs oil, oil in the accumulator module is discharged for supplement.

Specifically, when the accumulator module may be configured to adjust the height of the vehicle body of the vehicle, in this case, the oil in the accumulator module may be discharged to the oil channel 204 to enter the lower chamber 2012, or the oil in the lower chamber 2012 may be discharged to the accumulator module for energy storage. When the accumulator module is configured to adjust the damping of the reducer 200, in this case, a flow channel of the communicating channel becomes narrower or wider to adjust the damping (that is, flow resistance of the oil entering or leaving the reducer 200 increases or decreases). When the accumulator module is configured to adjust stiffness of the reducer 200, it is selected to communicate the communicating channel and the accumulator module, or it is selected to block the communication between the accumulator module and the communicating channel. In this way, an adjustment function of the hydraulic suspension apparatus may be added, to make driving of a vehicle arranged with the hydraulic suspension apparatus steadier.

As shown in Fig. 1 to 9 and 20 according to some embodiments of the present invention and as shown in Fig. 10 to 19 and 21 according to the non-claimed examples, the hydraulic suspension system further includes a first control valve 3. The first control valve 3 is arranged on the communicating channel, and is configured to control communication or separation between the liquid storage apparatus and the accumulator module. That is, when the first control valve 3 cuts off the communicating channel, a flow channel between the liquid storage apparatus and the accumulator module is blocked, and the oil in the liquid storage apparatus does not flow into the accumulator module. In this way, through the arrangement of the first control valve 3, it may be determined whether the accumulator module requires energy storage. When energy storage is required, the first control valve 3 is opened. When energy storage is completed, the first control valve 3 is closed, and the accumulator module is used to adjust at least one of the damping and stiffness of the reducer 200 and the height of the vehicle body of the vehicle.

As shown in Fig. 1 to 9 and 20 according to the embodiments of the present invention and as shown in Fig. 10 to 19 and 21 according to the non-claimed examples, the accumulator module includes a first accumulator 9 and an openness adjustment valve 8. The first accumulator 9 is communicated with the communicating channel at a first communicating point. The openness adjustment valve 8 is arranged between the first communicating point and the oil channel 204. The openness adjustment valve 8 is configured to adjust openness of a communicating channel between the oil channel 204 and the first communicating point, to adjust the damping of the reducer 200. The openness adjustment valve 8 is further configured to close a communicating channel between the oil channel 204 and the first communicating point, to adjust the stiffness of the reducer 200.

Specifically, the first accumulator 9 may perform energy storage. When the openness adjustment valve 8 is in an open state and openness of the openness adjustment valve 8 decreases to make an amount of oil that is allowed to circulate in the communicating channel decrease, the flow channel from the reducer 200 to the communicating channel becomes narrower, and the damping increases. When the openness of the openness adjustment valve 8 increases, the flow channel from the reducer 200 to the communicating channel becomes wider, and the damping decreases. Therefore, the first accumulator 9 and the openness adjustment valve 8 fit together, to ensure the reliability of adjusting the damping of the hydraulic suspension apparatus, thereby ensuring that the amount of oil that circulates in the communicating channel matches required damping. In other words, an oil discharge in a corresponding communicating channel may be adjusted through the openness adjustment valve 8. Therefore, damping of the corresponding communicating channel may be adjusted, to adjust the damping of the hydraulic suspension apparatus. In this way, damping of a hydraulic suspension system 1000 may be adjusted according to an actual case, for example, may be adjusted according to a road condition or the like, to ensure that the damping of the hydraulic suspension system 1000 can meet a vibration reduction requirement, thereby effectively resolving the contradiction between the comfort and the steering stability of the vehicle.

When the openness adjustment valve 8 is in a closed state, the reducer 200 and the first accumulator 9 are disconnected. The oil in the reducer 200 cannot be discharged to the first accumulator 9. The oil in the first accumulator 9 also cannot be discharged into the reducer 200. Therefore, the stiffness of the reducer 200 can be improved. In this case, the openness adjustment valve 8 is a cut-off adjustment valve, so that the openness can be adjusted, and cut-off and communication can be implemented.

In a third non-claimed example, the openness adjustment valve 8 includes a first motor and a first valve body. The first motor may control the motion of a valve in the first valve body, to change a circulation area of the first valve body to adjust a discharge.

According to the embodiments of the present invention, the accumulator module further includes a second accumulator 10 and a stiffness adjustment valve 11. A second communicating point communicated with the second accumulator 10 is arranged on the communicating channel. The stiffness adjustment valve 11 is arranged between the second accumulator 10 and the second communicating point. The stiffness adjustment valve 11 is configured to communicate or separate the communicating channel and the second accumulator 10 to adjust the stiffness of the reducer 200. Specifically, when the stiffness adjustment valve 11 is opened, oil can circulate between the second accumulator 10 and the reducer 200. When the stiffness adjustment valve 11 is closed, the second accumulator 10 and the reducer 200 are disconnected. In this way, the oil in the reducer 200 cannot be discharged into the second accumulator 10. Oil in the second accumulator 10 also cannot be discharged into the reducer 200. In this way, the stiffness of the reducer 200 can be increased.

According to the invention, as shown in FIG. 1 to FIG. 9, a second control valve 12 is further arranged between the second communicating point and the oil channel 204. In this way, when the second control valve 12 is closed and the stiffness adjustment valve 11 is opened, the oil in the liquid storage device 1 may enter the second accumulator 10 for energy storage. In this way, through the arrangement of the second control valve 12, so that the energy storage of the second accumulator 10 can be performed.

As shown in FIG. 1 to FIG. 21, the accumulator module further includes a first accumulator 9 and a second accumulator 10. The first accumulator 9 is communicated with the communicating channel at a first communicating point. A second communicating point communicated with the second accumulator 10 is arranged on the communicating channel. Specifically, through the arrangement of the first accumulator 9 and the second accumulator 10, in this way, the first accumulator 9 and the second accumulator 10 may be used to adjust stiffness of the communicating channel. Optionally, the first communicating point is located between the oil channel 204 and the second communicating point.

In some specific examples of the present invention, a second control valve 12 is arranged between the first communicating point and the second communicating point. In this way, through opening or closing of the second control valve 12, a quantity of accumulators communicated with the reducer 200 may be controlled, to adjust the stiffness or damping of the reducer 200.

A hydraulic suspension system 1000 according to embodiments of the present invention and with reference to some non-claimed examples, is described below with reference to FIG. 1 to FIG. 26. The hydraulic suspension system 1000 is used on a vehicle. The hydraulic suspension system 1000 is configured to connect an axle and a vehicle body of the vehicle.

A hydraulic suspension system according to embodiments of the present invention according to some non-claimed examples, includes a controller and the hydraulic suspension apparatus in any foregoing embodiment of the present invention. The controller is configured to control a flow direction of oil between the liquid storage apparatus and the reducer according to a status of a vehicle, to increase or reduce a height of a vehicle body of the vehicle.

It needs to be noted that, the hydraulic suspension system 1000 according to the embodiments of the present invention and according to some non-claimed examples includes a number of reducer assemblies 2.

The number of reducer assemblies 2 include a left-front reducer assembly 2, a left-rear reducer assembly 2, a right-front reducer assembly 2, and a right-rear reducer assembly 2. Each reducer assembly 2 includes a reducer 200. It needs to be noted that, in the description of the present invention, "front" refers to a direction facing the vehicle head, and "rear" refers to a direction facing the vehicle tail. In a direction facing the front, the right hand direction of a driver is the right side, and the left hand direction of the driver is the left side.

The oil channel 204 of each reducer assembly 2 is communicated with the liquid storage apparatus through the communicating channel. The oil in the liquid storage apparatus enters each oil channel 204 to enable the piston 202 to move upward, and the piston 202 drives the piston rod 203 and the vehicle body to move upward. In the height reduction mode, the oil in each lower chamber 2012 is discharged to the liquid storage apparatus through the oil channel 204, to enable the piston 202 to move downward, and the piston 202 drives the piston rod 203 and the vehicle body to move downward.

Specifically, the hydraulic suspension system 1000 has the lift mode and the height reduction mode. The controller controls the hydraulic suspension system 1000 according to the status of the vehicle to switch between the lift mode and the height reduction mode. In the lift mode, oil may enter the oil channel 204 of the left-front reducer assembly 2, the oil channel 204 of the right-front reducer assembly 2, the oil channel 204 of the left-rear reducer assembly 2, and the oil channel 204 of the right-rear reducer assembly 2. Hydraulic oil that enters each oil channel 204 flows into the lower chamber 2012, to enable the hydraulic pressure in the lower chamber 2012 to increase to enable the piston 202 to move upward, and the piston 202 moves upward to drive the piston rod 203 to move upward. The piston rod 203 of the left-front reducer assembly 2 moves upward, the piston rod 203 of the right-front reducer assembly 2 moves upward, the piston rod 203 of the left-rear reducer assembly 2 moves upward, and the piston rod 203 of the right-rear reducer assembly 2 moves upward to drive the vehicle body to move upward, to lift the vehicle body.

In the height reduction mode, under the action of gravity, oil may respectively flow out from the oil channel 204 of the left-front reducer assembly 2, the oil channel 204 of the right-front reducer assembly 2, the oil channel 204 of the left-rear reducer assembly 2, and the oil channel 204 of the right-rear reducer assembly 2. The hydraulic pressure in the lower chamber 2012 of each reducer 200 decreases to enable the piston 202 to move downward, and the piston 202 moves downward to drive the piston rod 203 to move downward. The piston rod 203 of the left-front reducer assembly 2 moves downward, the piston rod 203 of the right-front reducer assembly 2 moves downward, the piston rod 203 of the left-rear reducer assembly 2 moves downward, and the piston rod 203 of the right-rear reducer assembly 2 moves downward to drive the vehicle body to move downward, to reduce the height of the vehicle body.

In the driving process, the vehicle may encounter various road conditions. Once a suspension system of the vehicle in the related art is chosen, the suspension system cannot be adjusted in a driving process of a car. As a result, a conventional suspension can only ensure that the car reaches matching of optimal performance on a specific road and under a speed condition, and can only passively bear a force on the vehicle body by the ground. Parameters of the suspension cannot be changed according to different roads and vehicle speeds, and the force on the vehicle body by the ground cannot be actively controlled.

The hydraulic suspension system 1000 according to the embodiments of the present invention and according to some non-claimed examples may adjust the height of the vehicle body according to a road condition or the like. For example, on a relatively bumpy mountain road, the hydraulic suspension apparatus may enter the lift mode to raise the center of gravity of the vehicle, thereby improving the driving stability of the vehicle. When an impact of the vehicle body on a driving speed needs to be reduced, the hydraulic suspension apparatus may enter the height reduction mode to lower the center of gravity of the vehicle. Certainly, it may be understood that, the foregoing is only an exemplary description, and the height of the vehicle body may be adjusted according to an actual requirement in a driving process.

The hydraulic suspension system 1000 according to the embodiments of the present invention and according to some non-claimed examples may adjust a height of a vehicle body, and can improve the operational stability of a vehicle without damaging the comfort of the vehicle, so that the contradiction between the comfort and the steering stability of the vehicle is effectively resolved. In addition, the weight can be reduced by using the hollow piston rod 203, and the oil channel 204 defined by the hollow piston rod 203 is further used to implement intake or discharge of oil to adjust the position of the piston rod 203. The adjustment manner is simple, the reliability is high, the costs are low, and the response speed is fast. Further, the oil channel 204 communicated with the lower chamber 2012 is opened at the piston rod 203, and the oil channel 204 is communicated with the liquid storage apparatus. Therefore, an oil path can be stably communicated, wear or the like at a joint due to vibration is avoided, and liquid leakage at a joint can be avoided as much as possible.

In some specific examples of the present invention and in some non-claimed examples, the first control valve 3 configured to communicate or cut off each communicating channel is arranged on the communicating channel. That is, when the first control valve 3 corresponding to each reducer assembly 2 cuts off the corresponding communicating channel, the flow channel between the liquid storage device 1 and the oil channel 204 corresponding to the reducer assembly 2 is blocked, the oil in the liquid storage device 1 is kept from flowing into the corresponding reducer 200, and the oil in the reducer 200 is also kept from flowing to the liquid storage device 1.

As shown in FIG. 10 and FIG. 12 to FIG. 21, in some embodiments of the present invention and in some non-claimed examples, the hydraulic suspension system 1000 further includes a first height keeping branch and a second height keeping branch. The first height keeping branch is respectively communicated with the oil channel 204 of the left-front reducer assembly 2 and the oil channel 204 of the right-front reducer assembly 2, and a first height control valve 6 configured to communicate or cut off the first height keeping branch is arranged on the first height keeping branch.

The second height keeping branch is respectively communicated with the oil channel 204 of the left-rear reducer assembly 2 and the oil channel 204 of the right-rear reducer assembly 2, and a second height control valve 7 configured to communicate or cut off the second height keeping branch is arranged on the second height keeping branch.

Specifically, when the first height control valve 6 is opened, the first height keeping branch is communicated. When the first height control valve 6 is closed, the first height keeping branch is cut off. When the second height control valve 7 is opened, the second height keeping branch is communicated. When the second height control valve 7 is closed, the second height keeping branch is cut off.

When the height of the vehicle body needs to be kept, the hydraulic suspension system 1000 may switch to enter a height keeping mode, the first height control valve 6 and the second height control valve 7 are both opened, the first height keeping branch and the second height keeping branch are communicated, and the oil channel 204 of the left-front reducer assembly 2 is communicated with the oil channel 204 of the right-front reducer assembly 2. The oil channel 204 of the left-rear reducer assembly 2 is communicated with the oil channel 204 of the left-rear reducer assembly 2. That is, the piston rod 203 of the left-front reducer assembly 2 and the piston rod 203 of the right-front reducer assembly 2 are in a linked state, and the piston rod 203 of the left-rear reducer assembly 2 and the piston rod 203 of the right-rear reducer assembly 2 are in a linked state, to enable the vehicle body to keep a current height as much as possible.

In the embodiments of the present invention, as shown in FIG. 1 to Fig. 9 and in the non-claimed examples as shown in Figures 10 - 12, the accumulator module includes the second accumulator 10. One second accumulator 10 is correspondingly arranged on each reducer assembly 2. The second accumulator 10 is communicated with the communicating channel. The stiffness adjustment valve 11 is arranged at an oil access port of the second accumulator 10. The first control valve 3 is located between the second accumulator 10 and the liquid storage device 1. Specifically, when the first control valve 3 and the stiffness adjustment valve 11 are opened, the oil in the liquid storage device 1 may enter the second accumulator 10 for energy storage. When the first control valve 3 is closed and the stiffness adjustment valve 11 is opened, oil in each second accumulator 10 may be discharged into the oil channel 204 in the corresponding reducer assembly 2, to enable the piston rod 203 to rise. That is, the second accumulator 10 can further adjust the height of the vehicle body of the vehicle. When the stiffness needs to be increased, the first control valve 3 is closed and the stiffness adjustment valve **11** is closed, to disconnect the second accumulator 10 from the corresponding reducer 200, thereby increasing the stiffness of the suspension.

It may be understood that, each stiffness adjustment valve 11 may perform adjustment independently, so that stiffness on a front side and stiffness on a rear side of the hydraulic suspension system 1000 may be inconsistent, to meet different working condition requirements. For example, in an anti-dive working condition and a steering anti-tip working condition of the vehicle, a front axle needs to provide large stiffness. Therefore, the stiffness adjustment valves **11** corresponding to the left-front reducer assembly 2 and the right-front reducer assembly 2 may be closed, and the stiffness adjustment valves 11 corresponding to the right-rear reducer assembly 2 and the left-rear reducer assembly 2 are in an open state.

In some non-claimed examples, the first accumulator 9 is a metal bellows accumulator, and the second accumulator 10 is a membrane accumulator. Compared with the metal bellows accumulator, the membrane accumulator has a faster pressure storage capability and a larger pressure storage amount. The membrane accumulator may reach a larger pressure storage amount within a short time, and therefore the second accumulator 10 uses the membrane accumulator to perform pressure storage on the suspensions to lift the vehicle body. It needs to be noted that, the energy storage principle of the metal bellows accumulator and the membrane accumulator is the related art, and details are not described herein.

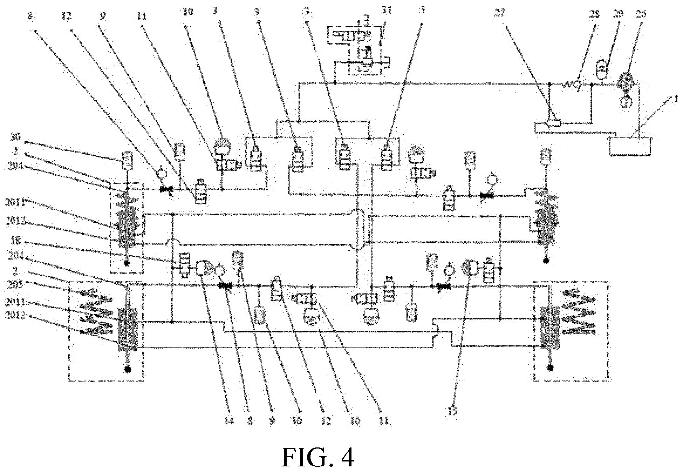

In some embodiments of the present invention, as shown in FIG. 1 to FIG. 9, the second control valve 12 configured to communicate or cut off the communicating channel is arranged on the communicating channel, and the second control valve 12 is located between the second accumulator 10 and the oil channel 204. Specifically, the hydraulic suspension system 1000 may have a pressurization mode. As shown in FIG. 4, in the pressurization mode, the first control valve 3 is opened, the second control valve 12 is closed, and the stiffness adjustment valve 11 is opened. The oil in the liquid storage device 1 enters the second accumulator 10 for energy storage.

When it is necessary to switch to the lift mode, the first control valve 3 is closed, the second control valve 12 is opened, and the stiffness adjustment valve **11** is opened. The oil in the second accumulator 10 enters the oil channel 204 to enable the piston 202 to rise.

When it is necessary to switch to the height reduction mode, the first control valve 3 is opened, the second control valve 12 is opened, and the stiffness adjustment valve 11 is closed. Oil discharged from the oil channel 204 of the reducer 200 flows back into the liquid storage device 1. In this way, through the arrangement of the second control valve 12, energy storage may be first performed on the stiffness adjustment valve 11. When it is necessary to perform lifting or stiffness adjustment, lifting or stiffness adjustment may be implemented by opening or closing the stiffness adjustment valve 11, so that the response speed is fast and reliable.

Optionally, the hydraulic suspension system 1000 may further have a braking anti-dive and acceleration anti-lift mode. In the driving process of the vehicle, the first control valve 3 corresponding to each reducer assembly 2 may be controlled to close, the second control valve 12 may be controlled to open, and the stiffness adjustment valve 11 may be controlled to close. The oil channel 204 of each reducer assembly 2 is communicated with the first accumulator 9, so that the first accumulator 9 may adjust the amount of oil in the corresponding reducer 200. Therefore, the reducer 200 corresponding to each reducer assembly 2 has a counterforce on a movement trend of the vehicle body at a corresponding position, to provide the hydraulic suspension system 1000 with the braking anti-dive and acceleration anti-lift mode.

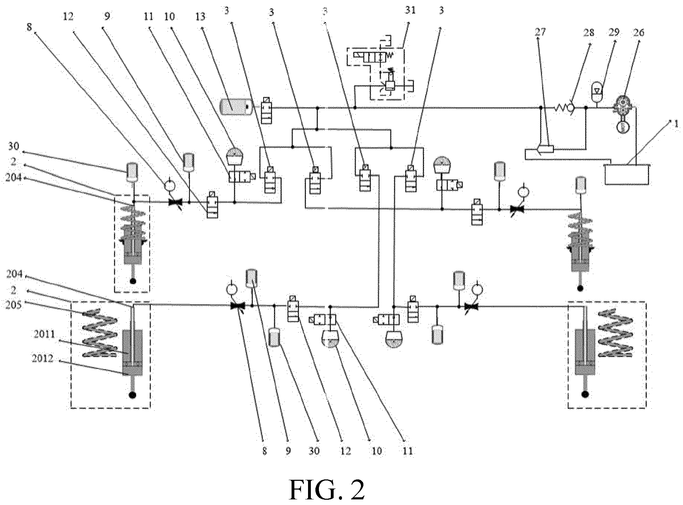

As shown in FIG. 2, FIG. 10, FIG. 12 to FIG. 19, and FIG. 21, in some non-claimed examples, the accumulator module includes a central accumulator 13. The first control valve 3 corresponding to each reducer assembly 2 is communicated with the central accumulator 13. That is, when the first control valve 3 is closed, the oil in the liquid storage device 1 may enter the central accumulator 13 for energy storage. When the first control valve 3 is opened, oil in the central accumulator 13 may flow into the oil channel 204 of each reducer assembly 2. In this way, through the arrangement of the central accumulator 13, pressurization and energy storage may be performed first, to ensure that oil can reliably flow to each reducer assembly 2, to make a quick response.

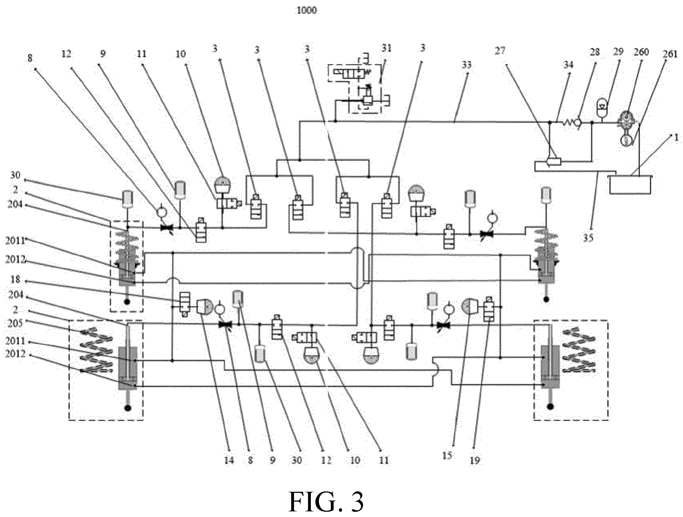

As shown in FIG. 3 to FIG. 8, in some embodiments of the present invention, the upper chamber 2011 of the left-front reducer assembly 2 is communicated with the lower chamber 2012 of the right-front reducer assembly 2 through a first pipe. The lower chamber 2012 of the left-front reducer assembly 2 is communicated with the upper chamber 2011 of the right-front reducer assembly 2 through a second pipe.

The upper chamber 2011 of the left-rear reducer assembly 2 is communicated with the lower chamber 2012 of the right-rear reducer assembly 2 through a third pipe. The lower chamber 2012 of the left-rear reducer assembly 2 is communicated with the upper chamber 2011 of the right-rear reducer assembly 2 through a fourth pipe.

Specifically, when the vehicle tends to tip, that is, the hydraulic suspension system 1000 has one side compressed and the other side extended, for example, the left-front reducer assembly 2 and the left-rear reducer assembly 2 are compressed, and the right-front reducer assembly 2 and the right-rear reducer assembly 2 are extended, in this case, oil in the lower chamber 2012 of the left-front reducer assembly 2 enters the upper chamber 2011 of the right-front reducer assembly 2 through the second pipe, to enable the piston rod 203 of the right-front reducer assembly 2 to lower.

The oil in the lower chamber 2012 of the left-rear reducer assembly 2 enters the upper chamber 2011 of the right-rear reducer assembly 2 through the fourth pipe, to enable the piston rod 203 of the right-rear reducer assembly 2 to lower. In this way, a downward force may be provided to the vehicle body on the right side by lowering the piston rod 203 of the right-front reducer assembly 2 and lowering the piston rod 203 of the right-rear reducer assembly 2. In this way, the hydraulic suspension system 1000 may provide an anti-tip torque to stop the vehicle from continuing to tip. Certainly, it may be understood that, the foregoing description of the flow path of oil is only an exemplary description to introduce an anti-tip principle. When the right side is compressed and the left side is extended, the foregoing anti-tip principle is used, and the hydraulic suspension system 1000 can provide an anti-tip force.

Optionally, as shown in FIG. 3 to FIG. 8, the first pipe is communicated with the third pipe to form a first return path, and the second pipe and the fourth pipe form a second return path. The hydraulic suspension system 1000 further includes a first adjustment accumulator 14 and a second adjustment accumulator 15. The first adjustment accumulator 14 is communicated with the first return path. A first adjustment valve 18 is arranged at an oil access port of the first adjustment accumulator 14. The second adjustment accumulator 15 is communicated with the second return path. A second adjustment valve 19 is arranged at the oil access port of the second adjustment accumulator 15.

Specifically, the first return path and the second return path are formed, so that linked adjustment of the right-front reducer assembly 2 with the left-front reducer assembly 2 and the left-rear reducer assembly 2 can be implemented, and linked adjustment of the right-rear reducer assembly 2 with the left-front reducer assembly 2 and the left-rear reducer assembly 2 can be implemented, to further ensure that an anti-tip torque can be provided to stop the vehicle from continuing to tip. Through the control of open or closed states of the first adjustment valve 18 and the second adjustment valve 19, stiffness of the hydraulic suspension system 1000 can be adjusted. For example, when the first adjustment valve 18 and the second adjustment valve 19 are closed, the stiffness of the hydraulic suspension system 1000 can be increased. Specifically, the first adjustment accumulator 14 and the second adjustment accumulator 15 may be membrane accumulators.

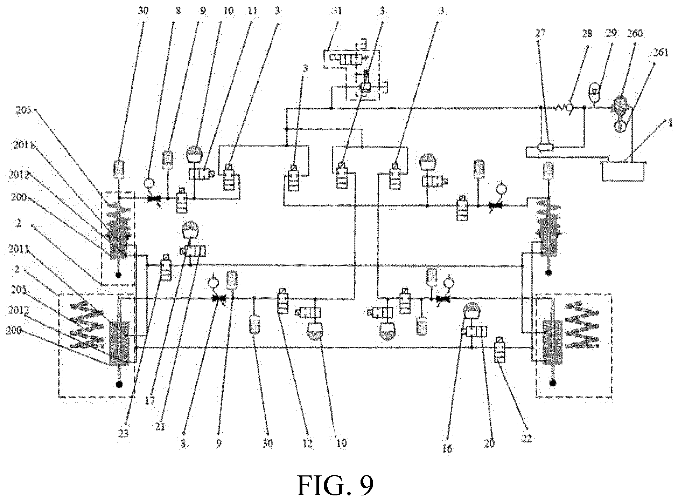

As shown in FIG. 9 to FIG. 19, the upper chamber 2011 of the left-front reducer assembly 2 is communicated with the lower chamber 2012 of the left-rear reducer assembly 2 through a fifth pipe. The lower chamber 2012 of the left-front reducer assembly 2 is communicated with the upper chamber 2011 of the left-rear reducer assembly 2 through a sixth pipe.

The upper chamber 2011 of the right-front reducer assembly 2 is communicated with the lower chamber 2012 of the right-rear reducer assembly 2 through a seventh pipe. The lower chamber 2012 of the right-front reducer assembly 2 is communicated with the upper chamber 2011 of the right-rear reducer assembly 2 through an eighth pipe.

Specifically, when the vehicle tends to pitch, that is, one of the front side and the rear side of the hydraulic suspension system 1000 is compressed and the other is extended, for example, the piston rod 203 of the left-front reducer assembly 2 and the piston rod 203 of the right-front reducer assembly 2 are compressed, oil in the lower chamber of the left-front reducer assembly 2 flows into the upper chamber 2011 of the left-rear reducer assembly 2 through the sixth pipe, to enable the piston rod 203 of the left-rear reducer assembly 2 to lower. In this way, the front and rear are kept consistent, to implement anti-pitch.

The oil in the lower chamber 2012 of the right-front reducer assembly 2 flows into the upper chamber 2011 of the right-rear reducer assembly 2 through the eighth pipe, to enable the piston rod 203 of the right-rear reducer assembly 2 to lower. In this way, the hydraulic suspension system 1000 may provide an anti-pitch force, to keep the vehicle from continuing to pitch.

Certainly, it may be understood that, the foregoing description of the flow path of oil is only an exemplary description to introduce an anti-pitch principle. When the rear side is compressed and the front side is extended, the foregoing anti-pitch principle is used, and the hydraulic suspension system 1000 can provide an anti-pitch force.

Optionally, as shown in FIG. 9 to FIG. 19, the fifth pipe is communicated with the seventh pipe through a first connecting pipe to form a third return path, and the sixth pipe is communicated with the eighth pipe through a second connecting pipe to form a fourth return path. The hydraulic suspension system 1000 further includes a third adjustment accumulator 16 and a fourth adjustment accumulator 17, the third adjustment accumulator 16 is communicated with the third return path, and the third adjustment valve 20 is arranged at the oil access port of the third adjustment accumulator 16. The fourth adjustment accumulator 17 is communicated with the fourth return path, and the fourth adjustment valve 21 is arranged at the oil access port of the fourth adjustment accumulator 17. Specifically, the third adjustment accumulator 16 and the fourth adjustment accumulator 17 may be membrane accumulators.

As can be learned, through the formation of the third return path and the fourth return path, linked adjustment of the right-front reducer assembly 2, the right-rear reducer assembly 2, the left-front reducer assembly 2, and the left-rear reducer assembly 2 can be implemented, so that it is further ensured that an anti-pitch torque can be provided to stop the vehicle from continuing to pitch. Through the control of open or closed states of the third adjustment valve 20 and the fourth adjustment valve 21, stiffness of the hydraulic suspension system 1000 can be adjusted. For example, when the third adjustment valve 20 and the fourth adjustment valve 21 are closed, the stiffness of the hydraulic suspension system 1000 can be increased.

In some embodiments of the present as shown in Fig. 9 and in some non-claimed examples as shown in figure 10, a first on-off valve 22 configured to communicate or cut off the first connecting pipe is arranged on the first connecting pipe, and a second on-off valve 23 configured to communicate or cut off the second connecting pipe is arranged on the second connecting pipe. That is, when the first on-off valve 22 is closed, the communication between the fifth pipe and the seventh pipe is blocked. When the second on-off valve 23 is closed, the communication between the sixth pipe and the eighth pipe is blocked. In this way, it may be determined, according to actual requirements, whether it is necessary to link the four reducer assemblies 2.

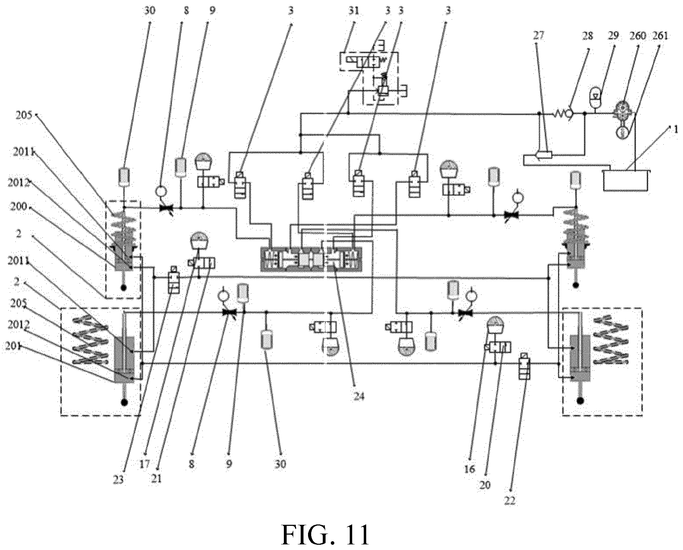

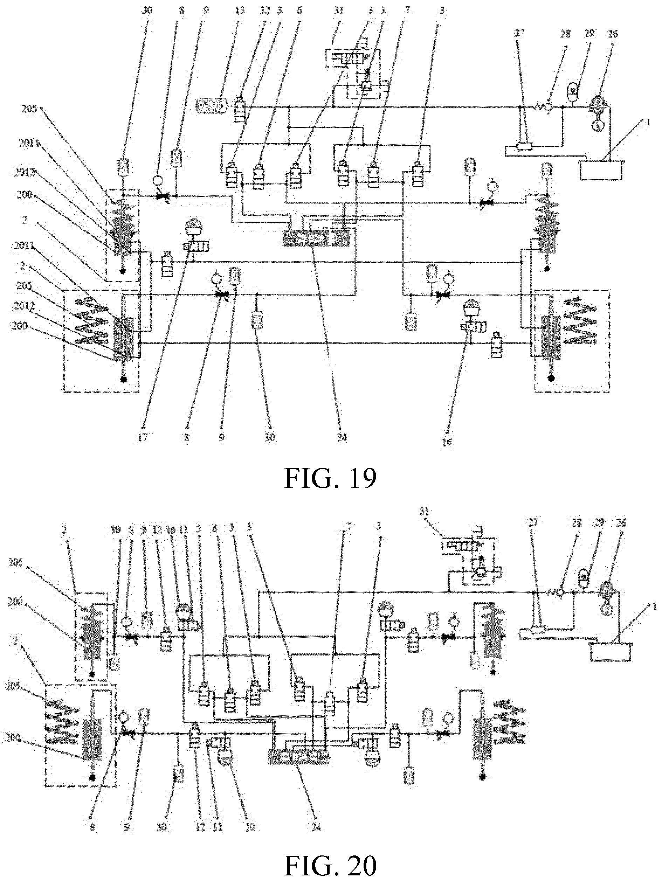

As shown in Fig. 20 according to the embodiments of the present invention and as shown in Fig. 11 to 19, 21 and 24 to 25 according to the non-claimed examples, the hydraulic suspension system 1000 further includes a central control cylinder 24. The central control cylinder 24 includes a second cylinder body 240 and a movement member 241. The movement member 241 may be movably arranged in the second cylinder body 240 and fit the second cylinder body 240 to define a first chamber 243, a second chamber 244, a third chamber 245, and a fourth chamber 246. The first chamber 243, the second chamber 244, the third chamber 245, and the fourth chamber 246 are sequentially arranged in a movement direction of the movement member 241. The first chamber 243 and the second chamber 244 are distributed on one side of a middle contact portion 2411 of the movement member 241. The third chamber 245 and the fourth chamber 246 are distributed on the other side of the middle contact portion 2411. The middle contact portion 2411 movably fits an inner wall of the second cylinder body 240.

The oil channel 204 of the left-front reducer assembly 2 is communicated with one of the first chamber 243 and the second chamber 244, and the oil channel 204 of the right-rear reducer assembly 2 is communicated with the other one of the first chamber 243 and the second chamber 244. The oil channel 204 of the left-rear reducer assembly 2 is communicated with one of the third chamber 245 and the fourth chamber 246, and the oil channel 204 of the right-front reducer assembly 2 is communicated with the other one of the third chamber 245 and the fourth chamber 246. For ease of description below, an example in which the oil channel 204 of the left-front reducer assembly 2 is communicated with the first chamber 243, the oil channel 204 of the right-rear reducer assembly 2 is communicated with the second chamber 244, the oil channel 204 of the left-rear reducer assembly 2 is communicated with the third chamber 245, and the oil channel 204 of the right-front reducer assembly 2 is communicated with the fourth chamber 246 is used to describe the principle.

Specifically, when the vehicle tends to tip, for example, the piston rods 203 of the left-front reducer assembly 2 and the left-rear reducer assembly 2 are compressed, and the right-front reducer assembly 2 and the piston rod 203 of the right-rear reducer assembly 2 are extended, in this case, the oil in the lower chamber 2012 of the left-front reducer assembly 2 is discharged to the first chamber 243 through the oil channel 204, and the oil in the lower chamber 2012 of the left-rear reducer assembly 2 is discharged to the third chamber 245 through the oil channel 204. Because the first chamber 243 and the third chamber 245 are located on two sides of the middle contact portion 2411, a direction of a force of oil in the first chamber 243 on the middle contact portion 2411 is opposite to a direction of a force of oil in the third chamber 245 on the middle contact portion 2411. The forces with two opposite directions cancel each other. In this way, the movement member 241 does not move. In this way, the movement of the piston rod 203 of the piston rods 203 of the left-front reducer assembly 2 and the movement of the left-rear reducer assembly 2 can be inhibited, so that the effect of inhibiting tipping can be achieved.

When the left-front wheel encounters an obstacle, the left-front wheel is lifted. In a continuous driving process, the center of gravity of the vehicle is lifted. The right-front wheel and the left-rear wheel have a risk of leaving the ground. In this way, the vehicle has a risk of getting out of control. When the left-front wheel of the vehicle encounters an obstacle such as a rock and the left-front wheel is lifted to make a compression degree of the left-front reducer assembly 2 greater than a compression degree of the left-rear reducer assembly 2, an amount of oil discharged from the left-front reducer assembly 2 into the first chamber 243 is greater than an amount of oil discharged from the left-rear reducer assembly 2 into the third chamber 245. In this way, the movement member 241 moves rightward to press the third chamber 245 and the fourth chamber 246. The oil in the third chamber 245 may be discharged into the lower chamber 2012 of the left-rear reducer assembly 2 to enable the piston rod 203 to move upward, and oil in the fourth chamber 246 may be discharged into the lower chamber 2012 of the right-front reducer assembly 2 to enable the piston rod 203 to move upward. In this way, a possibility that the left-rear wheel and the right-front wheel leave the ground is decreased, to improve the stability of the vehicle.

Certainly, it may be understood that, the foregoing several cases are only exemplary descriptions. When the vehicle encounters another working condition, for example, the right-front wheel being lifted, or the left-rear wheel being lifted, oil flows according to the foregoing linkage principle to keep the vehicle from tipping. Each working condition is not described in detail herein.

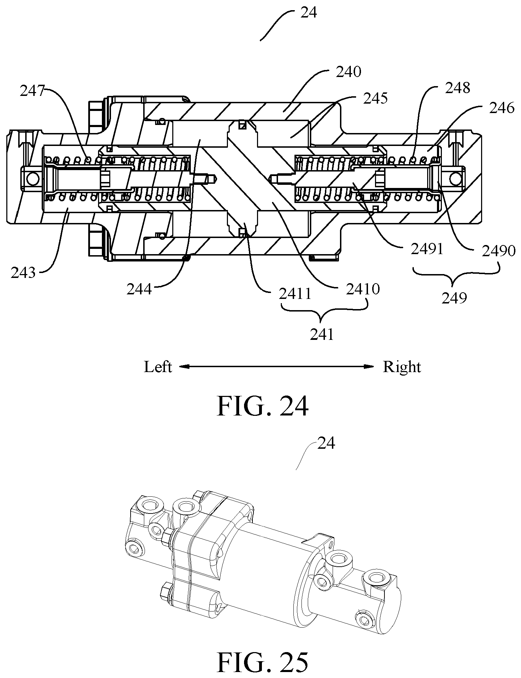

In some non-claimed examples, as shown in FIG. 24, the movement member 241 includes a movement body portion 2410. The middle contact portion 2411 is arranged at an annular protrusion on the movement body portion 2410. In the movement direction of the movement member 241, a middle cavity, a left cavity, and a right cavity are arranged in the second cylinder body 240. An extension opening of the left cavity and an extension opening of the right cavity are located in an inner wall of the middle cavity. A left end of the movement body portion 2410 extends into the left cavity through the extension opening of the left cavity, and a right end of the movement body portion 2410 extends into the right cavity through the extension opening of the right cavity.

The first chamber 243 is defined between a left end portion of the movement body portion 2410 and the left cavity. A part of the movement body portion 2410 slidably fits the inner wall of the left cavity. The middle contact portion 2411 slidably fits the inner wall of the middle cavity to define the second chamber 244 and the third chamber 245. The fourth chamber 246 is defined between a right end portion of the movement body portion 2410 and the right cavity. In this way, the structure of the central control cylinder 24 is simple.

Optionally, as shown in FIG. 24, the central control cylinder 24 further includes a first reset spring 247 and a second reset spring 248. Two ends of the first reset spring 247 are respectively abutted against left ends of the second cylinder body 240 and the movement member 241. Two ends of the second reset spring 248 are respectively abutted against right ends of the second cylinder body 240 and the movement member 241. The first reset spring 247 and the second reset spring 248 push the movement member 241 to be reset toward the middle. Specifically, when the vehicle tips to enable the movement member 241 to move leftward, the first reset spring 247 may push the movement member 241 toward the right to enable the movement member 241 to be reset. When the vehicle tips to enable the movement member 241 to move rightward, the second reset spring 248 may push the movement member 241 toward the left to enable the movement member 241 to be reset. In this way, the reliability of the central control cylinder 24 can be ensured.

In some non-claimed examples, as shown in FIG. 24, the central control cylinder 24 includes a guide assembly 249. The guide assembly includes a first guide member 2490 and a second guide member 2491. The first guide member 2490 slidably fits the second guide member 2491. The first guide member 2490 is fixed on the second cylinder body 240. The second guide member 2491 is fixed on the movement member 241. The first reset spring 247 is externally sleeved on the guide assembly 249 on the left side, and the first reset spring 247 is abutted against the first guide member 2490. The second reset spring 248 is externally sleeved on the guide assembly 249 on the right side, and the second reset spring 248 is abutted against the first guide member 2490. In this way, the arrangement of the guide assembly 249 makes it convenient to assemble the first reset spring 247 and the second reset spring 248, and further convenient to restrict deformation degrees of the first reset spring 247 and the second reset spring 248, to avoid a failure due to excessive deformation of the first reset spring 247 and the second reset spring 248.

Optionally, the second guide member 2491 is a screw, and an end of the second guide member 2491 extends into the first guide member 2490 to movably fit the first guide member 2490, making the structure of the guide assembly 249 simple and reliable.

As shown in FIG. 25, ports of the central control cylinder 24 that are connected to the piston rods 203 of the four reducer assemblies 2 are located on the same side, to facilitate pipe connection.

As shown in Fig. 1 to 9 and 20 according to the embodiments of the present invention and as shown in Fig. 10 to 19 and 21 to 23 according to the non-claimed examples, each reducer assembly 2 includes a vibration reduction spring 205, and two ends of the vibration reduction spring 205 are suitable for being connected to the vehicle body and the axle. In this way, through the arrangement of the vibration reduction spring 205, the cushioning effect of each reducer assembly 2 can be improved, to reduce the bumping of the vehicle body in the driving process of the vehicle.

Optionally, as shown in FIG. 1 to FIG. 23, the vibration reduction spring 205 of the left-front reducer assembly 2 is externally sleeved and fixed on the reducer 200. The vibration reduction spring 205 of the right-front reducer assembly 2 is externally sleeved and fixed on the reducer 200. The vibration reduction spring 205 and the reducer 200 of the left-rear reducer assembly 2 are arranged in parallel. The vibration reduction spring 205 and the reducer 200 of the right-rear reducer assembly 2 are arranged in parallel.

The hydraulic suspension system 1000 according to several specific embodiments of the present invention is described below in detail with reference to FIG. 1 to Fig. 10 and Fig. 20 and according to several non-claimed examples shown in Figures 11 - 19 and 21. It may be understood that, each foregoing embodiment is only an exemplary description rather than limitative description, and exemplary changes may be made to each embodiment according to an actual case.

### Embodiment 1:

As shown in FIG. 1, the hydraulic suspension system 1000 according to the embodiments of the present invention includes a left-front reducer assembly 2, a right-front reducer assembly 2, a left-rear reducer assembly 2, a right-rear reducer assembly 2, an accumulator module, a liquid storage device 1, a control pump 26, an oil return valve 27, a one-way valve 28, a constant pressure accumulator 29, a relief valve 31, and an openness adjustment valve 8. The accumulator module includes a first accumulator 9, a second accumulator 10, and a reduced pressure accumulator 30.

Each of the left-front reducer assembly 2 and the right-front reducer assembly 2 includes a reducer 200 and a vibration reduction spring 205. The vibration reduction spring 205 is externally sleeved and fixed on the reducer 200. Each of the left-rear reducer assembly 2 and the right-rear reducer assembly 2 includes a reducer 200 and a vibration reduction spring 205. The vibration reduction spring 205 and the reducer 200 are arranged in parallel. Two ends of the vibration reduction spring 205 of the left-rear reducer assembly 2 are respectively connected to a vehicle body and an axle. Two ends of the vibration reduction spring 205 of the right-rear reducer assembly 2 are respectively connected to the vehicle body and the axle. Each reducer 200 includes a reducer housing 201, a piston rod 203, and a piston 202. The piston rod 203 is connected to the piston 202. The piston 202 may be movably arranged in the reducer housing 201 to define an upper chamber 2011 and a lower chamber 2012. An oil channel 204 is arranged in the piston rod 203. The oil channel 204 is communicated with the lower chamber 2012. The oil channel 204 of each reducer assembly 2 is communicated with the liquid storage device 1 through a communicating channel. A first control valve 3 is arranged on each communicating channel.

The liquid storage device 1 has a liquid discharge port and a liquid inlet port. The control pump 26 is communicated with the liquid discharge port and the communicating channel to guide oil in the liquid storage device 1 to the communicating channel. The oil return valve 27 is communicated with the liquid inlet port and the communicating channel. When the oil return valve 27 is opened, oil flows from the communicating channel to the liquid inlet port. The one-way valve 28 is arranged at an outlet end of the control pump 26 and is in one-way communication. The constant pressure accumulator 29 is arranged at the outlet end of the control pump 26 and is located between the one-way valve 28 and the control pump 26. The constant pressure accumulator 29 may stabilize and eliminate discharge fluctuations of the outlet end of the control pump 26.

The hydraulic suspension system 1000 includes a common flow path and four branch flow paths. The four branch flow paths are respectively communicated with the oil channels 204 of the four reducer assemblies 2. The one-way valve 28 and the oil return valve 27 are respectively communicated with the common flow path. The relief valve 31 is communicated with the common flow path.

The first control valve 3 corresponding to each reducer assembly 2 is serially communicated with a corresponding branch flow path. The first control valve 3 is configured to control the branch flow path to be communicated or cut off.

The second accumulator 10 corresponding to each reducer assembly 2 is communicated with a corresponding branch flow path. A stiffness adjustment valve 11 is arranged at an oil access port of the second accumulator 10. The stiffness adjustment valve 11 is in a normally-closed state.

The openness adjustment valve 8, the first accumulator 9, and a second control valve 12 are further arranged on each branch flow path. The openness adjustment valve 8 is configured to adjust a discharge through a corresponding branch flow path to adjust damping of the hydraulic suspension system 1000. The first accumulator 9 may perform energy storage. The second control valve 12 is arranged between the first accumulator 9 and the second accumulator 10.

One reduced pressure accumulator 30 is correspondingly arranged on each reducer assembly 2. The reduced pressure accumulator 30 corresponding to the left-front reducer assembly 2 is directly connected to the piston rod 203 to be communicated with a corresponding oil channel 204. The reduced pressure accumulator 30 corresponding to the right-front reducer assembly 2 is directly connected to the piston rod 203 to be communicated with a corresponding oil channel 204. The reduced pressure accumulator 30 corresponding to the left-rear reducer assembly 2 is communicated with a corresponding branch flow path. The reduced pressure accumulator 30 corresponding to the right-rear reducer assembly 2 is directly communicated with a corresponding branch flow path.

Specifically, the hydraulic suspension system 1000 has a pressurization mode, a lift mode, and a height reduction mode. In the pressurization mode, the first control valve 3 is opened, the second control valve 12 is closed, the stiffness adjustment valve 11 is opened, the control pump 26 runs to enable the oil in the liquid storage device 1 to respectively flow into the corresponding second accumulators 10 through the four branch flow paths for energy storage. After energy storage is performed on each second accumulator 10, the stiffness adjustment valve 11 is closed.

In the lift mode, the oil in the liquid storage device 1 or oil in an energy storage module may enter the oil channel 204 of the left-front reducer assembly 2, the oil channel 204 of the right-front reducer assembly 2, the oil channel 204 of the left-rear reducer assembly 2, and the oil channel 204 of the right-rear reducer assembly 2. Hydraulic oil that enters each oil channel 204 flows into the lower chamber 2012, to enable hydraulic pressure in the lower chamber 2012 to increase to enable the piston 202 to move upward, and the piston 202 moves upward to drive the piston rod 203 to move upward. The piston rod 203 of the left-front reducer assembly 2 moves upward, the piston rod 203 of the right-front reducer assembly 2 moves upward, the piston rod 203 of the left-rear reducer assembly 2 moves upward, and the piston rod 203 of the right-rear reducer assembly 2 moves upward to drive the vehicle body to move upward, to lift the vehicle body.

In the height reduction mode, oil may respectively flow out from the oil channel 204 of the left-front reducer assembly 2, the oil channel 204 of the right-front reducer assembly 2, the oil channel 204 of the left-rear reducer assembly 2, and the oil channel 204 of the right-rear reducer assembly 2. The hydraulic pressure in the lower chamber 2012 of each reducer 200 decreases to enable the piston 202 to move downward, and the piston 202 moves downward to drive the piston rod 203 to move downward. The piston rod 203 of the left-front reducer assembly 2 moves downward, the piston rod 203 of the right-front reducer assembly 2 moves downward, the piston rod 203 of the left-rear reducer assembly 2 moves downward, and the piston rod 203 of the right-rear reducer assembly 2 moves downward to drive the vehicle body to move downward, to reduce the height of the vehicle body. It may be understood that, in the height reduction mode, oil discharged from each reducer assembly 2 may be directly discharged to the liquid storage device 1, or may be discharged into an accumulator assembly for energy storage, or is discharged to the liquid storage device 1 and the accumulator assembly.

When pressure in the hydraulic suspension system 1000 is large, for example, it is detected that pressure at an outlet of the control pump 26 reaches a specific threshold (30 MPa), the oil return valve 27 is opened to release the pressure to protect the hydraulic suspension system 1000 to be within a normal pressure range. In this case, oil in each reducer 200 may flow into the liquid storage device 1 through the communicating channel and the oil return valve 27.

If the pressure in the hydraulic suspension system 1000 is still large or pressure is large in a running process after pressure release, the relief valve 31 may be opened to release the pressure, to ensure reliable working of the entire hydraulic suspension system 1000.

In a driving process of a vehicle, if the damping of the hydraulic suspension system 1000 is large, the vehicle body is shaky to affect comfort, an amount of oil in each branch flow path may be adjusted through the openness adjustment valve 8 to adjust the damping of the hydraulic suspension system 1000. When the openness of the openness adjustment valve 8 is decreased to reduce an amount of oil that is allowed to circulate in the communicating channel, the damping increases. When the openness of the openness adjustment valve 8 increases, the damping decreases.

When stiffness of the hydraulic suspension system 1000 is large to reduce the comfort of the vehicle, the stiffness adjustment valve 11 may be controlled to be opened, oil in the second accumulator 10 may be supplemented into each branch flow path. In this way, the stiffness of the hydraulic suspension system 1000 can be reduced, and the cushioning effect of the hydraulic suspension system 1000 against bumping can be improved.

In the driving process of the vehicle, if the vehicle is impacted by bumping or the like, oil in the lower chamber 2012 of each reducer assembly 2 may enter the reduced pressure accumulator 30 through the oil channel 204 for energy storage, to implement quick pressure reduction. The front axle of the vehicle needs to ensure driving stability, and the rear axle of the vehicle mainly needs to ensure comfort. Therefore, the reduced pressure accumulator 30 corresponding to the left-front reducer assembly 2 is directly connected to the piston rod 203 to be communicated with a corresponding oil channel 204. The reduced pressure accumulator 30 corresponding to the right-front reducer assembly 2 is directly connected to the piston rod 203 to be communicated with a corresponding oil channel 204, so that quick pressure release can be implemented. The reduced pressure accumulator 30 of the rear axle may be arranged between the first accumulator 9 and the second accumulator 10, so that when flowing out of the reducer 200, oil undergoes damping before pressure release, thereby improving comfort.

### Embodiment 2:

As shown in FIG. 2, compared with Embodiment 1, the hydraulic suspension system 1000 according to this embodiment further includes a central accumulator 13 and a central energy storage adjustment valve 32. An oil access port of the central accumulator 13 is communicated with the central energy storage adjustment valve 32. The central energy storage adjustment valve 32 is communicated with a common flow path. It needs to be noted that, in this embodiment, the same structures and modes in Embodiment 1 are not described in detail.

In the pressurization mode, the central energy storage adjustment valve 32 is opened, the stiffness adjustment valve 11 is opened, and oil discharged from the liquid storage device 1 enters the central accumulator 13 and the second accumulator 10 for energy storage.

In the lift mode, the central energy storage adjustment valve 32 is opened, the stiffness adjustment valve 11 is closed, and oil that flow out of the central accumulator 13 is discharged to the lower chamber 2012 of each reducer assembly 2, to enable the piston rod 203 to lift the vehicle body.

In the height reduction mode, oil discharged from each reducer assembly 2 may be discharged to the central accumulator 13 and/or the liquid storage device 1.

### Embodiment 3:

As shown in FIG. 3 to FIG. 8, compared with Embodiment 1, an anti-tip mode is further added to the hydraulic suspension system 1000 according to the embodiments of the present invention.

As shown in FIG. 3 to FIG. 8, the upper chamber 2011 of the left-front reducer assembly 2 is communicated with the lower chamber 2012 of the right-front reducer assembly 2 through a first pipe. The lower chamber 2012 of the left-front reducer assembly 2 is communicated with the upper chamber 2011 of the right-front reducer assembly 2 through a second pipe.

The upper chamber 2011 of the left-rear reducer assembly 2 is communicated with the lower chamber 2012 of the right-rear reducer assembly 2 through a third pipe. The lower chamber 2012 of the left-rear reducer assembly 2 is communicated with the upper chamber 2011 of the right-rear reducer assembly 2 through a fourth pipe. The first pipe is communicated with the third pipe to form a first return path, and the second pipe and the fourth pipe form a second return path. The hydraulic suspension system 1000 further includes a first adjustment accumulator 14 and a second adjustment accumulator 15. The first adjustment accumulator 14 is communicated with the first return path. A first adjustment valve 18 is arranged at an oil access port of the first adjustment accumulator 14. The second adjustment accumulator 15 is communicated with the second return path. A second adjustment valve 19 is arranged at the oil access port of the second adjustment accumulator 15.

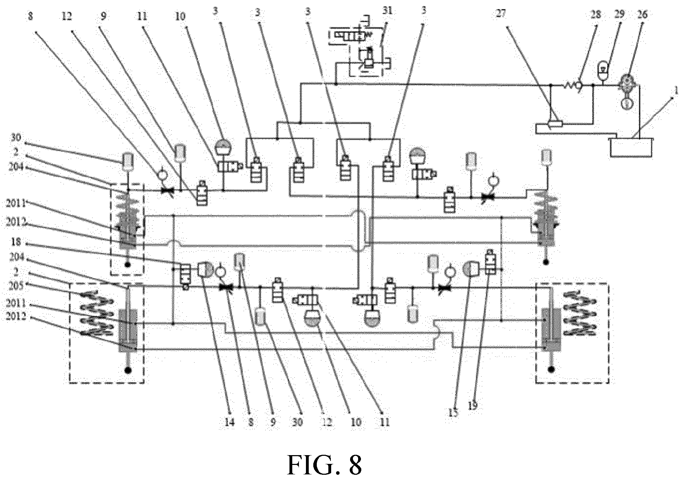

Specifically, as shown in FIG. 8, when the vehicle tends to tip, that is, the hydraulic suspension system 1000 has one side compressed and the other side extended, for example, the left-front reducer assembly 2 and the left-rear reducer assembly 2 are compressed, and the right-front reducer assembly 2 and the right-rear reducer assembly 2 are extended, in this case, oil in the lower chamber 2012 of the left-front reducer assembly 2 and the lower chamber 2012 of the left-rear reducer assembly 2 enters the upper chamber 2011 of the right-front reducer assembly 2 through the second return path.

The oil in the lower chamber 2012 of the left-rear reducer assembly 2 and the lower chamber 2012 of the left-front reducer assembly 2 enters the upper chamber 2011 of the right-rear reducer assembly 2 through the second return path, to enable the piston rod 203 of the right-front reducer assembly 2 to lower and enable the piston rod 203 of the right-rear reducer assembly 2 to lower. In this way, a downward force may be provided to the vehicle body on the right side, to keep the left and right of the vehicle consistent. In this way, the hydraulic suspension system 1000 may provide an anti-tip torque to stop the vehicle from continuing to tip. Certainly, it may be understood that, the foregoing description of the flow path of oil is only an exemplary description to introduce an anti-tip principle. When the right side is compressed and the left side is extended, the foregoing anti-tip principle is used, and the hydraulic suspension system 1000 can provide an anti-tip force.

As shown in FIG. 4, the first control valve 3 is opened, the second control valve 12 is closed, and the stiffness adjustment valve 11 is opened, to perform energy storage on each second accumulator 10.

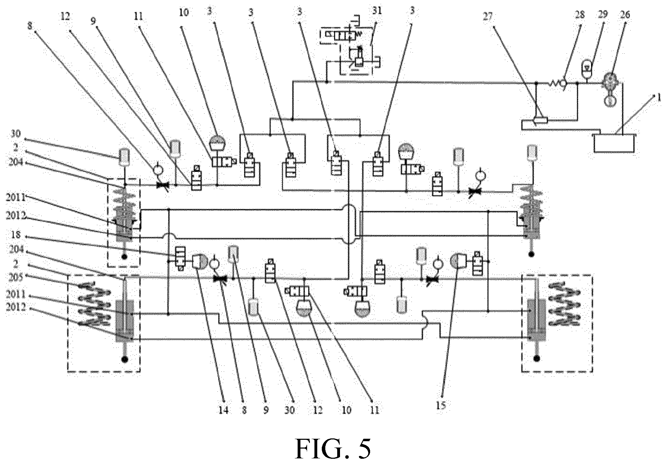

As shown in FIG. 5, in a lift working condition, the first control valve 3 is closed, the second control valve 12 opened, and the stiffness adjustment valve 11 is opened. The oil in the second accumulator 10 may enter an oil channel 204 of a corresponding reducer 200 to implement lifting.

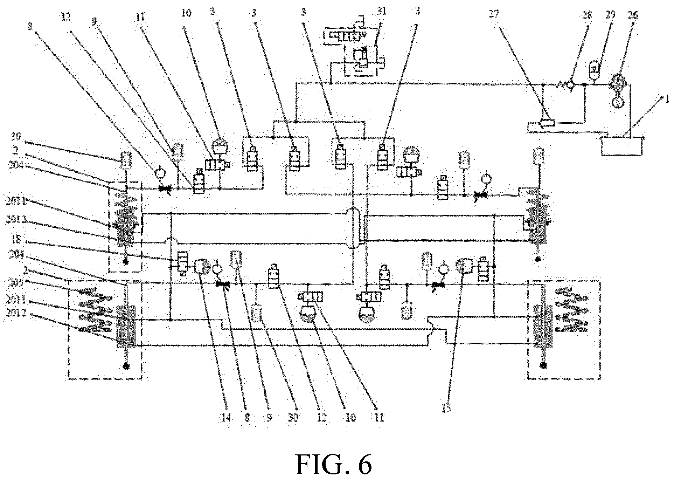

As shown in FIG. 6, in a height reduction working condition, the first control valve 3 is opened, the second control valve 12 is opened, and the stiffness adjustment valve 11 is closed. The piston rod 203 of each reducer 200 moves downward to enable the oil in the lower chamber 2012 to be discharged to the branch flow path through the oil channel 204. The oil in the four branch flow paths converges to the common flow path to flow through the oil return valve 27 to be discharged back into the liquid storage device 1.

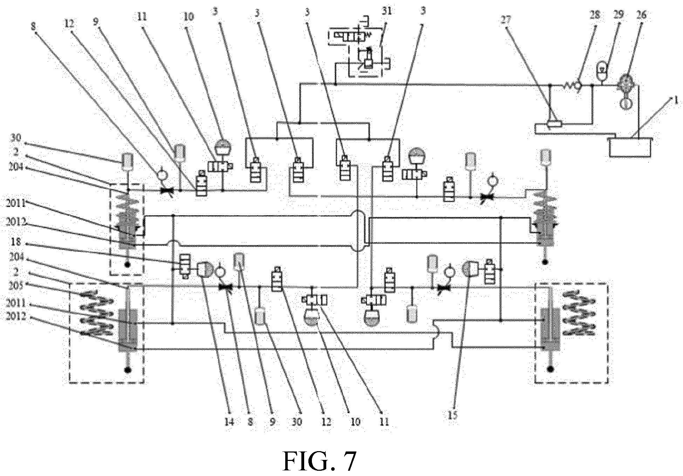

As shown in FIG. 7, the first control valve 3 is closed, the second control valve 12 is opened, and the stiffness adjustment valve 11 is closed. The oil in the first accumulator 9 and the reduced pressure accumulator 30 may be discharged to the oil channel 204, or the oil in the oil channel 204 may be discharged to the first accumulator 9 or the reduced pressure accumulator 30 for energy storage. It may be understood that, in a starting process of the vehicle, due to an inertial force, the rear portion of the vehicle tends to sink and the front portion of the vehicle tends to rise. Because the upper chamber 2011 of the left-front reducer assembly 2 is communicated with the lower chamber 2012 in the right-front reducer assembly 2, the piston rod 203 of the left-front reducer assembly 2 and the piston rod 203 of the right-front reducer assembly 2 are kept still. In this way, the front portion of the vehicle can be inhibited from rising, thereby implementing anti-lift. Similarly, in a braking process of the vehicle, anti-dive is further implemented.

### Embodiment 4:

As shown in FIG. 9, compared with Embodiment 1, in this embodiment, the hydraulic suspension system 1000 according to the embodiments of the present invention further has an anti-pitch mode.

The upper chamber 2011 of the left-front reducer assembly 2 is communicated with the lower chamber 2012 of the left-rear reducer assembly 2 through a fifth pipe. The lower chamber 2012 of the left-front reducer assembly 2 is communicated with the upper chamber 2011 of the left-rear reducer assembly 2 through a sixth pipe.

The upper chamber 2011 of the right-front reducer assembly 2 is communicated with the lower chamber 2012 of the right-rear reducer assembly 2 through a seventh pipe. The lower chamber 2012 of the right-front reducer assembly 2 is communicated with the upper chamber 2011 of the right-rear reducer assembly 2 through an eighth pipe. The fifth pipe is communicated with the seventh pipe through a first connecting pipe to form a third return path, and the sixth pipe is communicated with the eighth pipe through a second connecting pipe to form a fourth return path. The hydraulic suspension system 1000 further includes a third adjustment accumulator 16 and a fourth adjustment accumulator 17, the third adjustment accumulator 16 is communicated with the third return path, and the third adjustment valve 20 is arranged at the oil access port of the third adjustment accumulator 16. The fourth adjustment accumulator 17 is communicated with the fourth return path, and the fourth adjustment valve 21 is arranged at the oil access port of the fourth adjustment accumulator 17. A first on-off valve 22 configured to communicate or cut off the first connecting pipe is arranged on the first connecting pipe, and a second on-off valve 23 configured to communicate or cut off the second connecting pipe is arranged on the second connecting pipe.

Specifically, when the vehicle tends to pitch, that is, one of the front side and the rear side of the hydraulic suspension system 1000 is compressed and the other is extended, for example, the piston rod 203 of the left-front reducer assembly 2 and the piston rod 203 of the right-front reducer assembly 2 are compressed, oil in the lower chamber 2012 of the left-front reducer assembly 2 flows into the upper chamber 2011 of the left-rear reducer assembly 2 through the sixth pipe, to enable the piston rod 203 of the left-rear reducer assembly 2 to lower.

The oil in the lower chamber 2012 of the right-front reducer assembly 2 flows into the upper chamber 2011 of the right-rear reducer assembly 2 through the eighth pipe, to enable the piston rod 203 of the right-front reducer assembly 2 to lower. In this way, the hydraulic suspension system 1000 may provide an anti-pitch force, to keep the vehicle from continuing to pitch.

Through the formation of the third return path and the fourth return path, linked adjustment of the right-front reducer assembly 2, the right-rear reducer assembly 2, the left-front reducer assembly 2, and the left-rear reducer assembly 2 can be implemented, so that it is further ensured that an anti-pitch torque can be provided to stop the vehicle from continuing to pitch. Through the control of open or closed states of the third adjustment valve 20 and the fourth adjustment valve 21, stiffness of the hydraulic suspension system 1000 can be adjusted. For example, when the third adjustment valve 20 and the fourth adjustment valve 21 are closed, the stiffness of the hydraulic suspension system 1000 can be increased.

When the first on-off valve 22 is closed, the communication between the fifth pipe and the seventh pipe is blocked. When the second on-off valve 23 is closed, the communication between the sixth pipe and the eighth pipe is blocked. In this way, it may be determined, according to actual requirements, whether it is necessary to link the four reducer assemblies 2.

Certainly, it may be understood that, the foregoing description of the flow path of oil is only an exemplary description to introduce an anti-pitch principle. When the rear side is compressed and the front side is extended, the foregoing anti-pitch principle is used, and the hydraulic suspension system 1000 can provide an anti-pitch force.

### Non-claimed example 1

As shown in FIG. 10, compared with Embodiment 4, the second accumulator 10 is not arranged in the hydraulic suspension system 1000 according to the embodiments of the present invention. The hydraulic suspension system 1000 according to the embodiments of the present invention further includes a central accumulator 13, a first height keeping branch, and a second height keeping branch. The first height keeping branch is respectively communicated with the oil channel 204 of the left-front reducer assembly 2 and the oil channel 204 of the right-front reducer assembly 2, and a first height control valve 6 configured to communicate or cut off the first height keeping branch is arranged on the first height keeping branch.

The second height keeping branch is respectively communicated with the oil channel 204 of the left-rear reducer assembly 2 and the oil channel 204 of the right-rear reducer assembly 2, and a second height control valve 7 configured to communicate or cut off the second height keeping branch is arranged on the second height keeping branch.

Specifically, when the first height control valve 6 is opened, the first height keeping branch is communicated. When the first height control valve 6 is closed, the first height keeping branch is cut off. When the second height control valve 7 is opened, the second height keeping branch is communicated. When the second height control valve 7 is closed, the second height keeping branch is cut off.

When the height of the vehicle body needs to be kept, the hydraulic suspension system 1000 may switch to enter a height keeping mode, the first height control valve 6 and the second height control valve 7 are both opened, the first height keeping branch and the second height keeping branch are communicated, and the oil channel 204 of the left-front reducer assembly 2 is communicated with the oil channel 204 of the right-front reducer assembly 2. The oil channel 204 of the left-rear reducer assembly 2 is communicated with the oil channel 204 of the right-rear reducer assembly 2. That is, the piston rod 203 of the left-front reducer assembly 2 and the piston rod 203 of the right-front reducer assembly 2 are in a linked state, and the piston rod 203 of the left-rear reducer assembly 2 and the piston rod 203 of the right-rear reducer assembly 2 are in a linked state, to enable the vehicle body to keep a current height as much as possible.

In the height keeping mode, the first control valve 3 and the second control valve 12 are controlled to be kept in a closed state.

In this example in the pressurization mode, the first control valve 3 is closed, and the oil in the liquid storage device 1 is discharged to the central accumulator 13 for energy storage.

### Non-claimed example 2:

As shown in FIG. 11, in this example compared with Embodiment 4, the hydraulic suspension system 1000 according to the non-claimed examples further includes a central control cylinder 24.

The central control cylinder 24 includes a second cylinder body 240 and a movement member 241. The movement member 241 may be movably arranged in the second cylinder body 240 and fit the second cylinder body 240 to define a first chamber 243, a second chamber 244, a third chamber 245, and a fourth chamber 246. The first chamber 243, the second chamber 244, the third chamber 245, and the fourth chamber 246 are sequentially arranged in a movement direction of the movement member 241. The first chamber 243 and the second chamber 244 are distributed on one side of a middle contact portion 2411 of the movement member 241. The third chamber 245 and the fourth chamber 246 are distributed on the other side of the middle contact portion 2411. The middle contact portion 2411 movably fits an inner wall of the second cylinder body 240.

The oil channel 204 of the left-front reducer assembly 2 is communicated with one of the first chamber 243 and the second chamber 244, and the oil channel 204 of the right-rear reducer assembly 2 is communicated with the other one of the first chamber 243 and the second chamber 244. The oil channel 204 of the left-rear reducer assembly 2 is communicated with one of the third chamber 245 and the fourth chamber 246, and the oil channel 204 of the right-front reducer assembly 2 is communicated with the other one of the third chamber 245 and the fourth chamber 246. For ease of description below, an example in which the oil channel 204 of the left-front reducer assembly 2 is communicated with the first chamber 243, the oil channel 204 of the right-rear reducer assembly 2 is communicated with the second chamber 244, the oil channel 204 of the left-rear reducer assembly 2 is communicated with the third chamber 245, and the oil channel 204 of the right-front reducer assembly 2 is communicated with the fourth chamber 246 is used to describe the principle.

Specifically, when the vehicle tends to tip, for example, the piston rods 203 of the left-front reducer assembly 2 and the left-rear reducer assembly 2 are compressed, and the right-front reducer assembly 2 and the piston rod 203 of the right-rear reducer assembly 2 are extended, in this case, the oil in the lower chamber 2012 of the left-front reducer assembly 2 is discharged to the first chamber 243 through the oil channel 204, and the oil in the lower chamber 2012 of the left-rear reducer assembly 2 is discharged to the third chamber 245 through the oil channel 204. Because the first chamber 243 and the third chamber 245 are located on two sides of the middle contact portion 2411, a direction of a force of oil in the first chamber 243 on the middle contact portion 2411 is opposite to a direction of a force of oil in the third chamber 245 on the middle contact portion 2411. The forces with two opposite directions cancel each other. In this way, the movement member 241 does not move. In this way, the movement of the piston rod 203 of the piston rods 203 of the left-front reducer assembly 2 and the movement of the left-rear reducer assembly 2 can be inhibited, so that the effect of inhibiting tipping can be achieved.

When the left-front wheel of the vehicle encounters an obstacle such as a rock and the left-front wheel is lifted to make a compression degree of the left-front reducer assembly 2 greater than a compression degree of the left-rear reducer assembly 2, an amount of oil discharged from the left-front reducer assembly 2 into the first chamber 243 is greater than an amount of oil discharged from the left-rear reducer assembly 2 into the third chamber 245. In this way, the movement member 241 moves rightward to press the third chamber 245 and the fourth chamber 246. The oil in the third chamber 245 may be discharged into the lower chamber 2012 of the left-rear reducer assembly 2 to enable the piston rod 203 to move upward, and oil in the fourth chamber 246 may be discharged into the lower chamber 2012 of the right-front reducer assembly 2 to enable the piston rod 203 to move upward. In this way, a possibility that the left-rear wheel and the right-front wheel leave the ground is decreased, to improve the stability of the vehicle. Certainly, it may be understood that, the foregoing several cases are only exemplary descriptions. When the vehicle encounters another working condition, for example, the right-front wheel being lifted, or the left-rear wheel being lifted, oil flows according to the foregoing linkage principle to keep the vehicle from tipping. Each working condition is not described in detail herein.

It may be understood that, the hydraulic suspension system 1000 in this embodiment also has the anti-pitch mode described in Embodiment 4. Details are not described herein again.

### Non-claimed example 3:

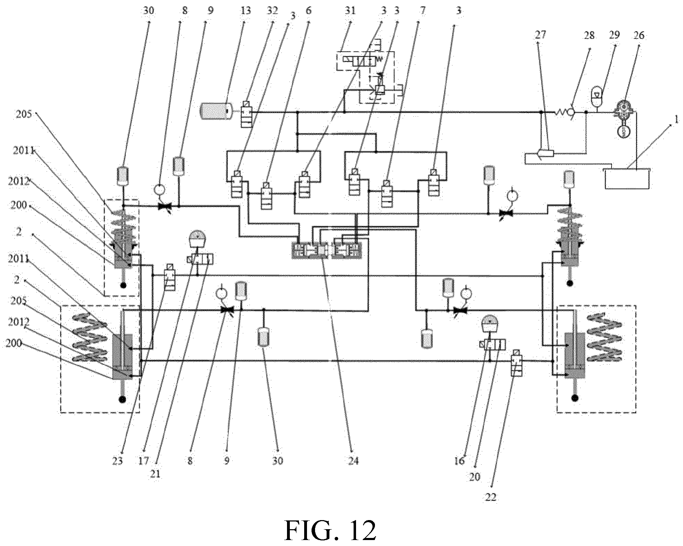

As shown in FIG. 12 to FIG. 19, in this example compared with Embodiment 4, the second accumulator 10 is canceled in the hydraulic suspension system 1000 according to the non-claimed examples. A central accumulator 13, a central control cylinder 24, a first height keeping branch, and a second height keeping branch are arranged in the hydraulic suspension system 1000 according to the embodiments of the present invention.

An oil access port of the central accumulator 13 is communicated with the central energy storage adjustment valve 32. The central energy storage adjustment valve 32 is communicated with a common flow path.

The central control cylinder 24 includes a second cylinder body 240 and a movement member 241. The movement member 241 may be movably arranged in the second cylinder body 240 and fit the second cylinder body 240 to define a first chamber 243, a second chamber 244, a third chamber 245, and a fourth chamber 246. The first chamber 243, the second chamber 244, the third chamber 245, and the fourth chamber 246 are sequentially arranged in a movement direction of the movement member 241. The first chamber 243 and the second chamber 244 are distributed on one side of a middle contact portion 2411 of the movement member 241. The third chamber 245 and the fourth chamber 246 are distributed on the other side of the middle contact portion 2411. The middle contact portion 2411 movably fits an inner wall of the second cylinder body 240.

The oil channel 204 of the left-front reducer assembly 2 is communicated with one of the first chamber 243 and the second chamber 244, and the oil channel 204 of the right-rear reducer assembly 2 is communicated with the other one of the first chamber 243 and the second chamber 244. The oil channel 204 of the left-rear reducer assembly 2 is communicated with one of the third chamber 245 and the fourth chamber 246, and the oil channel 204 of the right-front reducer assembly 2 is communicated with the other one of the third chamber 245 and the fourth chamber 246.

The first height keeping branch is respectively communicated with the oil channel 204 of the left-front reducer assembly 2 and the oil channel 204 of the right-front reducer assembly 2, and a first height control valve 6 configured to communicate or cut off the first height keeping branch is arranged on the first height keeping branch.

The second height keeping branch is respectively communicated with the oil channel 204 of the left-rear reducer assembly 2 and the oil channel 204 of the right-rear reducer assembly 2, and a second height control valve 7 configured to communicate or cut off the second height keeping branch is arranged on the second height keeping branch.

Specifically, for ease of description below, an example in which the oil channel 204 of the left-front reducer assembly 2 is communicated with the first chamber 243, the oil channel 204 of the right-rear reducer assembly 2 is communicated with the second chamber 244, the oil channel 204 of the left-rear reducer assembly 2 is communicated with the third chamber 245, and the oil channel 204 of the right-front reducer assembly 2 is communicated with the fourth chamber 246 is used to describe the principle.

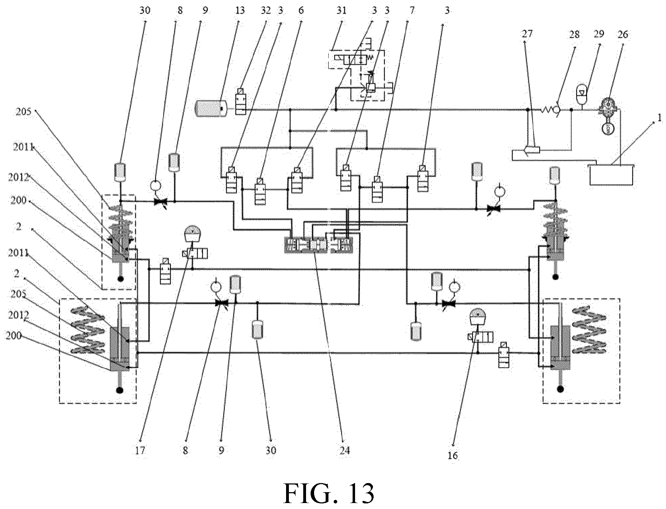

Specifically, as shown in FIG. 13, the hydraulic suspension system 1000 enters the pressurization mode. The central energy storage adjustment valve 32 is opened, the four first control valves 3 are closed, the first height control valve 6 is closed, and the second height control valve 7 is closed. Oil that flows out of the liquid storage device 1 is discharged to the central accumulator 13 for energy storage.

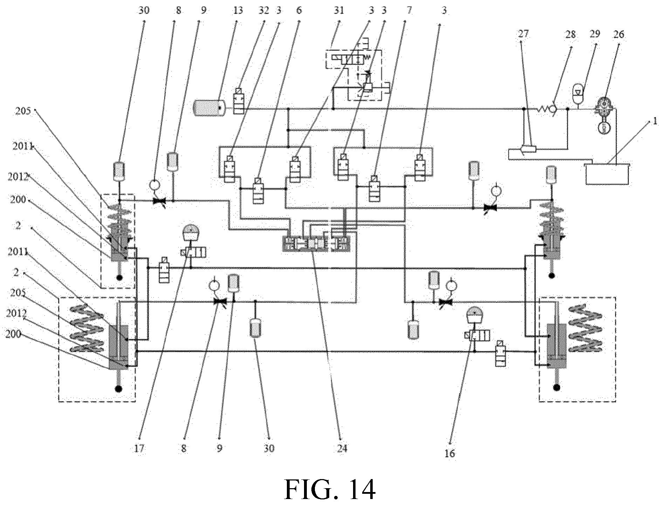

As shown in FIG. 14, when the vehicle enters the lift mode, the central energy storage adjustment valve 32 is opened, the four first control valves 3 are opened, the first height control valve 6 is closed, and the second height control valve 7 is closed.

Oil discharged from the central accumulator 13 respectively enters the oil channels 204 of the four reducer assemblies 2 through the four branch flow paths. The oil in the oil channel 204 enters the lower chamber 2012 to enable the piston rod 203 to move upward to raise the vehicle body.

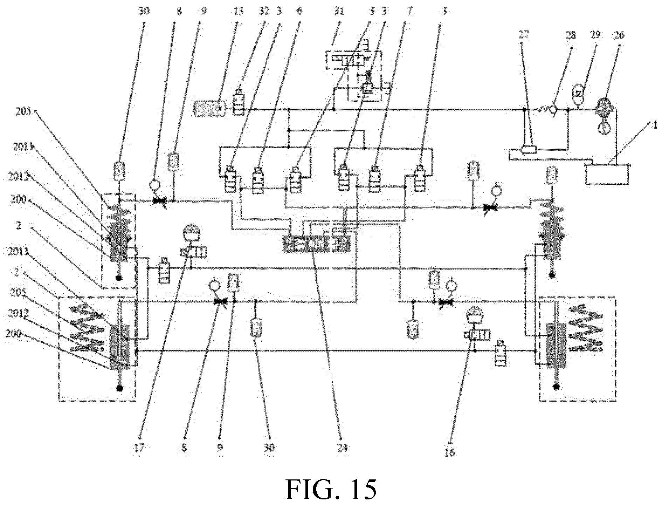

As shown in FIG. 15, when the height of the vehicle body needs to be kept, the hydraulic suspension system 1000 may switch to enter a height keeping mode, the first height control valve 6 and the second height control valve 7 are both opened, the four first control valves 3 are closed, the first height keeping branch and the second height keeping branch are communicated, and the oil channel 204 of the left-front reducer assembly 2 is communicated with the oil channel 204 of the right-front reducer assembly 2. The oil channel 204 of the left-rear reducer assembly 2 is communicated with the oil channel 204 of the right-rear reducer assembly 2. That is, the piston rod 203 of the left-front reducer assembly 2 and the piston rod 203 of the right-front reducer assembly 2 are in a linked state, and the piston rod 203 of the left-rear reducer assembly 2 and the piston rod 203 of the right-rear reducer assembly 2 are in a linked state, to enable the vehicle body to keep a current height as much as possible.

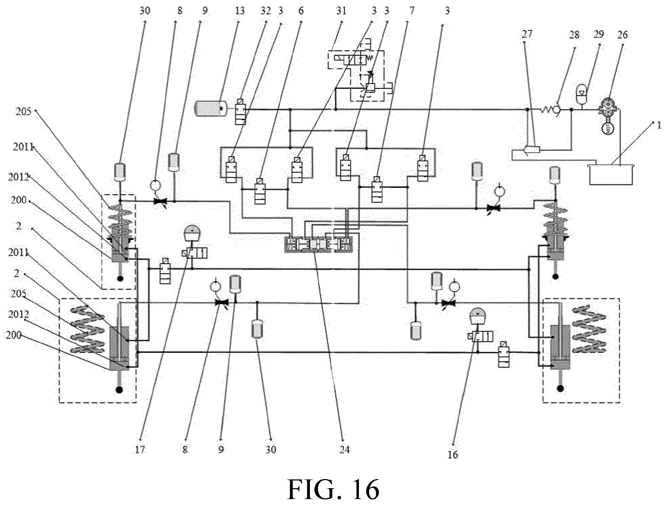

As shown in FIG. 16, when the vehicle enters the height reduction mode, the central energy storage adjustment valve 32 is closed, the four first control valves 3 are opened, the first height control valve 6 is closed, and the second height control valve 7 is closed.

Oil discharged from the lower chamber 2012 of each reducer assembly 2 passes through the communicating channel and the oil return valve 27 to flow back into the liquid storage device 1. In this way, each piston rod 203 moves downward to reduce the height of the vehicle body.

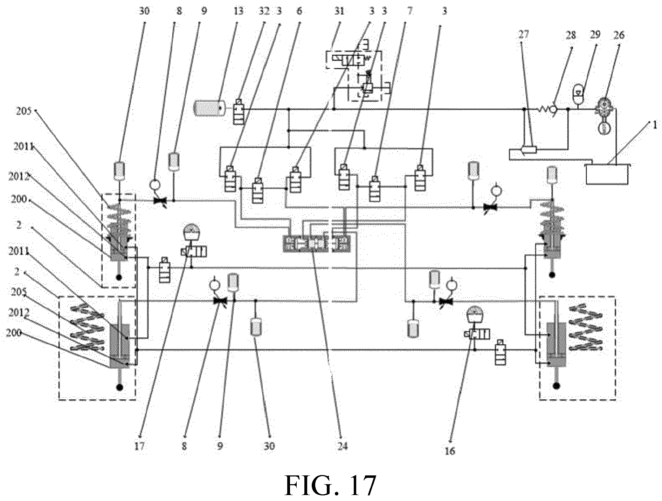

As shown in FIG. 17, the central energy storage adjustment valve 32 is closed, the first height adjustment valve 6 is closed, the second height adjustment valve 7 is closed, and the four first control valves 3 are closed.

When the vehicle tends to tip, for example, the piston rods 203 of the left-front reducer assembly 2 and the left-rear reducer assembly 2 are compressed, and the right-front reducer assembly 2 and the piston rod 203 of the right-rear reducer assembly 2 are extended, in this case, the oil in the lower chamber 2012 of the left-front reducer assembly 2 is discharged to the first chamber 243 through the oil channel 204, and the oil in the lower chamber 2012 of the left-rear reducer assembly 2 is discharged to the third chamber 245 through the oil channel 204. Because the first chamber 243 and the third chamber 245 are located on two sides of the middle contact portion 2411, a direction of a force of oil in the first chamber 243 on the middle contact portion 2411 is opposite to a direction of a force of oil in the third chamber 245 on the middle contact portion 2411. The forces with two opposite directions cancel each other. In this way, the movement member 241 does not move. In this way, the movement of the piston rod 203 of the piston rods 203 of the left-front reducer assembly 2 and the movement of the left-rear reducer assembly 2 can be inhibited, so that the effect of inhibiting tipping can be achieved.

When the left-front wheel of the vehicle encounters an obstacle such as a rock and the left-front wheel is lifted to make a compression degree of the left-front reducer assembly 2 greater than a compression degree of the left-rear reducer assembly 2, an amount of oil discharged from the left-front reducer assembly 2 into the first chamber 243 is greater than an amount of oil discharged from the left-rear reducer assembly 2 into the third chamber 245. In this way, the movement member 241 moves rightward to press the third chamber 245 and the fourth chamber 246. The oil in the third chamber 245 may be discharged into the lower chamber 2012 of the left-rear reducer assembly 2 to enable the piston rod 203 to move upward, and oil in the fourth chamber 246 may be discharged into the lower chamber 2012 of the right-front reducer assembly 2 to enable the piston rod 203 to move upward. In this way, a possibility that the left-rear wheel and the right-front wheel leave the ground is decreased, to improve the stability of the vehicle.

Certainly, it may be understood that, the foregoing several cases are only exemplary descriptions. When the vehicle encounters another working condition, for example, the right-front wheel being lifted, or the left-rear wheel being lifted, oil flows according to the foregoing linkage principle to keep the vehicle from tipping. Each working condition is not described in detail herein.

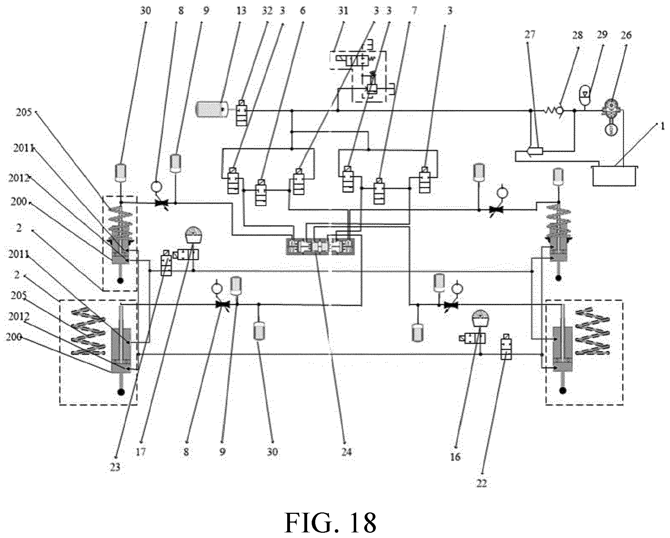

As shown in FIG. 18, the third adjustment valve 20 is opened, the fourth adjustment valve 21 is opened, the central energy storage adjustment valve 32 is closed, the first height adjustment valve 6 is closed, the second height adjustment valve 7 is closed, the four first control valves 3 is closed, the first on-off valve 22 is opened, and the second on-off valve 23 is opened.

When the vehicle tends to pitch, that is, one of the front side and the rear side of the hydraulic suspension system 1000 is compressed and the other is extended, for example, the piston rod 203 of the left-front reducer assembly 2 and the piston rod 203 of the right-front reducer assembly 2 are compressed, the piston rod 203 of the left-rear reducer assembly 2 and the piston rod 203 of the right-rear reducer assembly 2 are extended, oil in the lower chamber 2012 of the left-front reducer assembly 2 flows into the upper chamber 2011 of the left-rear reducer assembly 2 through the sixth pipe, to enable the piston rod 203 of the left-rear reducer assembly 2 to lower.

The oil in the lower chamber 2012 of the right-front reducer assembly 2 enters the upper chamber 2011 of the right-rear reducer assembly 2 through the eighth pipe, to enable the piston rod 203 of the right-rear reducer assembly 2 to lower. In this way, the hydraulic suspension system 1000 may provide an anti-pitch force, to keep the vehicle from continuing to pitch.

Through the formation of the third return path and the fourth return path, linked adjustment of the right-front reducer assembly 2, the right-rear reducer assembly 2, the left-front reducer assembly 2, and the left-rear reducer assembly 2 can be implemented, so that it is further ensured that an anti-pitch torque can be provided to stop the vehicle from continuing to pitch. Through the control of open or closed states of the third adjustment valve 20 and the fourth adjustment valve 21, stiffness of the hydraulic suspension system 1000 can be adjusted. For example, when the third adjustment valve 20 and the fourth adjustment valve 21 are closed, the stiffness of the hydraulic suspension system 1000 can be increased.

Certainly, it may be understood that, the foregoing description of the flow path of oil is only an exemplary description to introduce an anti-pitch principle. When the rear side is compressed and the front side is extended, the foregoing anti-pitch principle is used, and the hydraulic suspension system 1000 can provide an anti-pitch force.

It may be understood that, when the hydraulic suspension system 1000 according to the embodiments of the present invention is used in an off-road vehicle, to increase an off-road RTI, as shown in FIG. 19, the third adjustment valve 20 is closed, the fourth adjustment valve 21 is closed, the central energy storage adjustment valve 32 is closed, the four first control valves 3 is closed, the first on-off valve 22 is closed, and the second on-off valve 23 is closed. The first height adjustment valve 6 is opened, and the second height adjustment valve 7 is opened.

The anti-tip principle and the height keeping principle described above are used. When an off-road vehicle travels on a bumpy mountain road, the hydraulic suspension system 1000 may provide an anti-tip force and a vehicle body height keeping force, and therefore is not prone to tipping.

### Embodiment 5:

As shown in FIG. 20, in this embodiment, compared with Embodiment 1, the hydraulic suspension system 1000 according to the embodiments of the present invention further includes a central control cylinder 24, a first height keeping branch, and a second height keeping branch.

The central control cylinder 24 includes a second cylinder body 240 and a movement member 241. The movement member 241 may be movably arranged in the second cylinder body 240 and fit the second cylinder body 240 to define a first chamber 243, a second chamber 244, a third chamber 245, and a fourth chamber 246. The first chamber 243, the second chamber 244, the third chamber 245, and the fourth chamber 246 are sequentially arranged in a movement direction of the movement member 241. The first chamber 243 and the second chamber 244 are distributed on one side of a middle contact portion 2411 of the movement member 241. The third chamber 245 and the fourth chamber 246 are distributed on the other side of the middle contact portion 2411. The middle contact portion 2411 movably fits an inner wall of the second cylinder body 240.

The oil channel 204 of the left-front reducer assembly 2 is communicated with one of the first chamber 243 and the second chamber 244, and the oil channel 204 of the right-rear reducer assembly 2 is communicated with the other one of the first chamber 243 and the second chamber 244. The oil channel 204 of the left-rear reducer assembly 2 is communicated with one of the third chamber 245 and the fourth chamber 246, and the oil channel 204 of the right-front reducer assembly 2 is communicated with the other one of the third chamber 245 and the fourth chamber 246. For ease of description below, an example in which the oil channel 204 of the left-front reducer assembly 2 is communicated with the first chamber 243, the oil channel 204 of the right-rear reducer assembly 2 is communicated with the second chamber 244, the oil channel 204 of the left-rear reducer assembly 2 is communicated with the third chamber 245, and the oil channel 204 of the right-front reducer assembly 2 is communicated with the fourth chamber 246 is used to describe the principle.

Specifically, when the vehicle tends to tip, for example, the piston rods 203 of the left-front reducer assembly 2 and the left-rear reducer assembly 2 are compressed, and the right-front reducer assembly 2 and the piston rod 203 of the right-rear reducer assembly 2 are extended, in this case, the oil in the lower chamber 2012 of the left-front reducer assembly 2 is discharged to the first chamber 243 through the oil channel 204, and the oil in the lower chamber 2012 of the left-rear reducer assembly 2 is discharged to the third chamber 245 through the oil channel 204. Because the first chamber 243 and the third chamber 245 are located on two sides of the middle contact portion 2411, a direction of a force of oil in the first chamber 243 on the middle contact portion 2411 is opposite to a direction of a force of oil in the third chamber 245 on the middle contact portion 2411. The forces with two opposite directions cancel each other. In this way, the movement member 241 does not move. In this way, the movement of the piston rod 203 of the left-front reducer assembly 2 and the movement of the piston rod 203 of the left-rear reducer assembly 2 can be inhibited, so that the effect of inhibiting tipping can be achieved.

When the left-front wheel of the vehicle encounters an obstacle such as a rock and the left-front wheel is lifted to make a compression degree of the left-front reducer assembly 2 greater than a compression degree of the left-rear reducer assembly 2, an amount of oil discharged from the left-front reducer assembly 2 into the first chamber 243 is greater than an amount of oil discharged from the left-rear reducer assembly 2 into the third chamber 245. In this way, the movement member 241 moves rightward to press the third chamber 245 and the fourth chamber 246. The oil in the third chamber 245 may be discharged into the lower chamber 2012 of the left-rear reducer assembly 2 to enable the piston rod 203 to move upward, and oil in the fourth chamber 246 may be discharged into the lower chamber 2012 of the right-front reducer assembly 2 to enable the piston rod 203 to move upward. In this way, a possibility that the left-rear wheel and the right-front wheel leave the ground is decreased, to improve the stability of the vehicle.

Certainly, it may be understood that, the foregoing several cases are only exemplary descriptions. When the vehicle encounters another working condition, for example, the right-front wheel being lifted, or the left-rear wheel being lifted, oil flows according to the foregoing linkage principle to keep the vehicle from tipping. Each working condition is not described in detail herein.

The first height keeping branch is respectively communicated with the oil channel 204 of the left-front reducer assembly 2 and the oil channel 204 of the right-front reducer assembly 2, and a first height control valve 6 configured to communicate or cut off the first height keeping branch is arranged on the first height keeping branch.

The second height keeping branch is respectively communicated with the oil channel 204 of the left-rear reducer assembly 2 and the oil channel 204 of the right-rear reducer assembly 2, and a second height control valve 7 configured to communicate or cut off the second height keeping branch is arranged on the second height keeping branch.

Specifically, when the first height control valve 6 is opened, the first height keeping branch is communicated. When the first height control valve 6 is closed, the first height keeping branch is cut off. When the second height control valve 7 is opened, the second height keeping branch is communicated. When the second height control valve 7 is closed, the second height keeping branch is cut off.

When the height of the vehicle body needs to be kept, the hydraulic suspension system 1000 may switch to enter a height keeping mode, the first height control valve 6 and the second height control valve 7 are both opened, the first height keeping branch and the second height keeping branch are communicated, and the oil channel 204 of the left-front reducer assembly 2 is communicated with the oil channel 204 of the right-front reducer assembly 2. The oil channel 204 of the left-rear reducer assembly 2 is communicated with the oil channel 204 of the left-rear reducer assembly 2. That is, the piston rod 203 of the left-front reducer assembly 2 and the piston rod 203 of the right-front reducer assembly 2 are in a linked state, and the piston rod 203 of the left-rear reducer assembly 2 and the piston rod 203 of the right-rear reducer assembly 2 are in a linked state, to enable the vehicle body to keep a current height as much as possible.

### Non-claimed example 4:

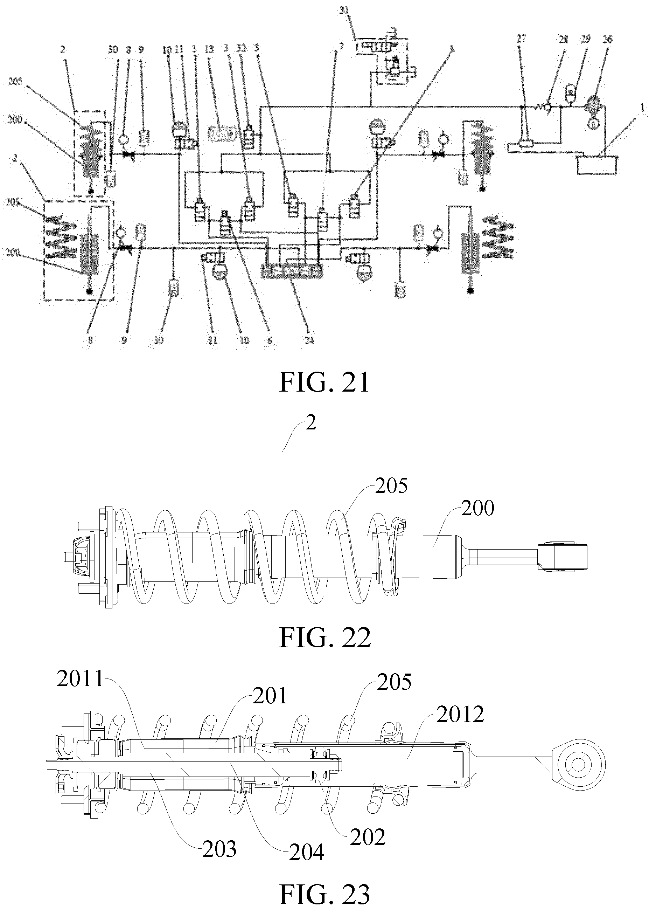

As shown in FIG. 21, in this example, compared with Embodiment 5, the second control valve 12 is not arranged in the hydraulic suspension system 1000 according to the non-claimed examples, and the hydraulic suspension system 1000 includes a central accumulator 13.

It needs to be noted that, in this example, in the pressurization mode, the oil in the liquid storage device 1 flows to the central accumulator 13 and the second accumulator 10 for energy storage.

The modes of the hydraulic suspension system 1000 in this embodiment are the same as those in Embodiment 8. Details are not described herein.

It needs to be noted that, the foregoing 5 embodiments and 4 non-claimed examples are only exemplary descriptions. The modes of the hydraulic suspension system 1000 are not exhaustively described in each embodiment or non-claimed example. The foregoing 5 embodiments and 4 non-claimed examples all have the lift mode, the height reduction mode, damping adjustment, and the like. Details are not described in each embodiment.

A vehicle according to embodiments of the present invention includes the hydraulic suspension system 1000 according to any foregoing embodiment of the present invention.

The vehicle according to the embodiments of the present invention may adjust the height of the vehicle body according to a road condition or the like. For example, on a relatively bumpy mountain road, the hydraulic suspension apparatus may enter the lift mode to raise the center of gravity of the vehicle, thereby improving the driving stability of the vehicle. When an impact of the vehicle body on a driving speed needs to be reduced, the hydraulic suspension apparatus may enter the height reduction mode to lower the center of gravity of the vehicle. Certainly, it may be understood that, the foregoing is only an exemplary description, and the height of the vehicle body may be adjusted according to an actual requirement in a driving process.

The vehicle according to the embodiments of the present invention may adjust a height of a vehicle body, and can improve the operational stability of a vehicle without damaging the comfort of the vehicle, so that the contradiction between the comfort and the steering stability of the vehicle is effectively resolved. In addition, the weight can be reduced by using the hollow piston rod 203, and the oil channel 204 defined by the hollow piston rod 203 is further used to implement intake or discharge of oil to adjust the position of the piston rod 203. The adjustment manner is simple, the reliability is high, the costs are low, and the response speed is fast. Further, the oil channel 204 communicated with the lower chamber 2012 is opened at the piston rod 203, and the oil channel 204 is communicated with the liquid storage apparatus. Therefore, an oil path can be stably communicated, wear or the like at a joint due to vibration is avoided, and liquid leakage at a joint can be avoided as much as possible.

Other structures such as a braking system and operations of the vehicle according to the embodiments of the present invention are known to those of ordinary skill in the art, and details are not described herein again.

In the description of the present invention, it should be understood that, orientations or position relationships indicated by terms such as "center", "longitudinal", "transverse", "length", "width", "thickness", "up", "down", "front", "back", "left", "right", "vertical", "horizontal", "top", "bottom", "inner", "outer", "clockwise", "counterclockwise", "axial", "radial", and "circumferential" are orientations or position relationship shown based on the accompanying drawings, and are merely used for describing the present invention and simplifying the description, rather than indicating or implying that the apparatus or element should have a particular orientation or be constructed and operated in a particular orientation, and therefore, should not be construed as a limitation on the present invention.

In addition, terms "first" and "second" are used only for describing objectives, and shall not be construed as indicating or implying relative importance or implying a quantity of indicated technical features. Therefore, a feature restricted by "first " or "second" may explicitly indicate or implicitly include one or more such features. In descriptions of the present invention, "multiple" means more than two, unless otherwise defined clearly and specifically.

In the present invention, unless otherwise clearly specified and limited, terms "mount", "connect", and "fix" should be understood in a generalized manner, for example, may be understood as fixed connection, detachable connection, or integration; or may be understood as mechanical connection or electrical connection, or may be understood as direct connection, or indirect connection by means of a medium, or internal communication of two elements or a mutual relationship between two elements. A person of ordinary skill in the art may understand specific meanings of the terms in the present invention according to specific situations.

In the present invention, unless explicitly specified or limited otherwise, a first characteristic "on" or "under" a second characteristic may be the first characteristic in direct contact with the second characteristic, or the first characteristic in indirect contact with the second characteristic by using an intermediate medium. Moreover, the first feature "on", "above" and "on the top of" the second feature may be that the first feature is directly above or obliquely above the second feature, or merely that the level of the first feature level is higher than that of the second feature. The first feature "under", "below" and "on the bottom of" the second feature may be that the first feature is directly below or obliquely below the second feature, or merely that the level of the first feature is lower than that of the second feature.

In description of the specification, description of reference terms such as "one embodiment", "some embodiments", "example", "specific example" or "some examples" means including specific features, structures, materials, or features described in the embodiment or example in at least one embodiment or example of the present invention. In this specification, schematic descriptions of the foregoing terms do not need to aim at a same embodiment or example. In addition, the described specific features, structures, materials, or features can be combined in a proper manner in any one or more embodiments or examples. Moreover, different embodiments or examples and features of different embodiments or examples described in the specification can be synthesized and combined by those skilled in the art as long as no conflict occurs.

### Reference numerals:

hydraulic suspension system 1000,
liquid storage device 1, reducer assembly 2, reducer 200, reducer housing 201, upper chamber 2011, lower chamber 2012, piston 202, piston rod 203, oil channel 204, vibration reduction spring 205, and first control valve 3,
first height control valve 6, second height control valve 7, openness adjustment valve 8, first accumulator 9, second accumulator 10, metal bellows 101, stiffness adjustment valve 11, second control valve 12, central accumulator 13, central energy storage adjustment valve 32, first adjustment accumulator 14, second adjustment accumulator 15, third adjustment accumulator 16, fourth adjustment accumulator 17, first adjustment valve 18, second adjustment valve 19, third adjustment valve 20, fourth adjustment valve 21, first on-off valve 22, second on-off valve 23, central control cylinder 24, second cylinder body 240, movement member 241, movement body portion 2410, middle contact portion 2411, first chamber 243, second chamber 244, third chamber 245, fourth chamber 246, first reset spring 247, second reset spring 248, guide assembly 249, first guide member 2490, second guide member 2491, control pump 26, control valve body 260, drive motor 261, oil return valve 27, one-way valve 28, constant pressure accumulator 29, reduced pressure accumulator 30, relief valve 31, shared channel 33, oil outlet branch 34, and oil return branch 35.

## Claims

1. A hydraulic suspension apparatus, configured to adjust a height of a vehicle body of a vehicle, comprising:
a liquid storage apparatus, the liquid storage apparatus being suitable for being arranged on the vehicle body and being configured to store oil; and
a reducer (200), the reducer having a reducer housing (201), a piston (202), and a piston rod (203), the reducer housing being suitable for being connected to an axle, the piston being located in the reducer housing and fitting the reducer housing to define an upper chamber (2011) and a lower chamber (2012), an end of the piston rod being connected to the piston, the piston rod being suitable for being connected to the vehicle body, an oil channel (204) being provided in the piston rod, and the oil channel being communicated with the lower chamber and the liquid storage apparatus, to make oil flowable between the liquid storage apparatus and the lower chamber,
further comprising an accumulator module, the oil channel is communicated with the liquid storage apparatus through a communicating channel, the accumulator module is communicated with the communicating channel, and the accumulator module is suitable for at least adjusting at least one of damping and stiffness of the reducer and the height of the vehicle body of the vehicle,
wherein the accumulator module comprises a first accumulator (9) and an openness adjustment valve (8), the first accumulator is communicated with the communicating channel at a first communicating point, the openness adjustment valve is arranged between the first communicating point and the oil channel, the openness adjustment valve is configured to adjust openness of a communicating channel between the oil channel and the first communicating point, to adjust the damping of the reducer, and the openness adjustment valve is further configured to close a communicating channel between the oil channel and the first communicating point, to adjust the stiffness of the reducer.
wherein the accumulator module further comprises a second accumulator (10) and a stiffness adjustment valve (11), a second communicating point communicated with the second accumulator is arranged on the communicating channel, the stiffness adjustment valve is arranged between the second accumulator and the second communicating point, and the stiffness adjustment valve is configured to communicate or separate the communicating channel and the second accumulator to adjust the stiffness of the reducer, wherein a second control valve (12) is further arranged between the second communicating point and the oil channel.

2. The hydraulic suspension apparatus according to claim 1, wherein the liquid storage apparatus comprises a control pump (26) and a liquid storage device, and the control pump is arranged between the liquid storage device and the oil channel.

3. The hydraulic suspension apparatus according to claim 1 or 2, wherein an upper end of the piston rod extends out of the reducer housing, an oil port is formed at the upper end of the piston rod, and the oil port is configured to communicate the oil channel and the liquid storage apparatus.

4. The hydraulic suspension apparatus according to claim 2, further comprising an oil outlet channel and an oil return channel, the oil outlet channel and the oil return channel are both communicated between the liquid storage device and the oil channel (204), the oil outlet channel and the oil return channel partially overlap, and the control pump is arranged on the oil outlet channel.

5. The hydraulic suspension apparatus according to claim 4, wherein the oil outlet channel comprises a shared channel (33) and an oil outlet branch (34), the oil return channel comprises the shared channel and an oil return branch, one end of the shared channel is communicated with the oil channel, and the oil outlet branch and the oil return branch are both communicated with the other end of the shared channel.

6. The hydraulic suspension apparatus according to claim 5, wherein a one-way valve (28) and the control pump are arranged on the oil outlet branch, one end of the one-way valve is communicated with the shared channel, the other end of the one-way valve is communicated with the control pump, and an oil return valve is arranged on the oil return branch.

7. The hydraulic suspension apparatus according to any one of the preceding claims, further comprising a first control valve, and the first control valve is arranged on the communicating channel, and is configured to control communication or separation between the liquid storage apparatus and the accumulator module.

8. A hydraulic suspension system (1000), comprising a controller and the hydraulic suspension apparatus according to any one of claims 1 to 7, the controller being configured to control a flow direction of oil between the liquid storage apparatus and the reducer according to a status of a vehicle, to increase or reduce a height of a vehicle body of the vehicle.

9. A vehicle, comprising the hydraulic suspension system (1000) according to claim 8.

## Patentansprüche

1. Hydraulische Federungsvorrichtung, die dazu konfiguriert ist, die Höhe einer Fahrzeugkarosserie eines Fahrzeugs einzustellen, umfassend:
eine Flüssigkeitsspeichervorrichtung, wobei die Flüssigkeitsspeichervorrichtung zur Anordnung an der Fahrzeugkarosserie geeignet und dazu konfiguriert ist, Öl zu speichern; und
eine Reduziereinheit (200), wobei die Reduziereinheit ein Reduzierhgehäuse (201), einen Kolben (202) und eine Kolbenstange (203) aufweist, wobei das Reduzierhgehäuse dazu geeignet ist, mit einer Achse verbunden zu werden, wobei sich der Kolben im Reduzierhgehäuse befindet und in dem Reduzierhgehäuse passt, um eine obere Kammer (2011) und eine untere Kammer (2012) zu bilden, wobei ein Ende der Kolbenstange mit dem Kolben verbunden ist, die Kolbenstange zur Verbindung mit der Fahrzeugkarosserie geeignet ist, ein Ölkanal (204) in der Kolbenstange vorgesehen ist und der Ölkanal mit der unteren Kammer und der Flüssigkeitsspeichervorrichtung in Verbindung steht, um Öl zwischen der Flüssigkeitsspeichervorrichtung und der unteren Kammer fließen zu lassen,
wobei ferner ein Akkumulatormodul vorgesehen ist, der Ölkanal über einen Verbindungskanal mit der Flüssigkeitsspeichervorrichtung in Verbindung steht, das Akkumulatormodul mit dem Verbindungskanal in Verbindung steht und das Akkumulatormodul dazu geeignet ist, zumindest eines von Dämpfung und Steifigkeit der Reduziereinheit sowie die Höhe der Fahrzeugkarosserie des Fahrzeugs einzustellen,
wobei das Akkumulatormodul einen ersten Akkumulator (9) und ein Öffnungsregelventil (8) umfasst, der erste Akkumulator an einem ersten Verbindungspunkt mit dem Verbindungskanal verbunden ist, das Öffnungsregelventil zwischen dem ersten Verbindungspunkt und dem Ölkanal angeordnet ist, das Öffnungsregelventil dazu konfiguriert ist, die Öffnung eines Verbindungskanals zwischen dem Ölkanal und dem ersten Verbindungspunkt einzustellen, um die Dämpfung des Reduzierers einzustellen, und das Öffnungsregelventil ferner dazu konfiguriert ist, einen Verbindungskanal zwischen dem Ölkanal und dem ersten Verbindungspunkt zu schließen, um die Steifigkeit der Reduziereinheit einzustellen.
wobei das Akkumulatormodul ferner einen zweiten Akkumulator (10) und ein Steifigkeitseinstellventil (11) umfasst, wowbei ein zweiter Verbindungspunkt, der mit dem zweiten Akkumulator in Verbindung steht, an dem Verbindungskanal angeordnet ist, wobei das Steifigkeitseinstellventil zwischen dem zweiten Akkumulator und dem zweiten Verbindungspunkt angeordnet ist und das Steifigkeitseinstellventil dazu konfiguriert ist, den Verbindungskanal und den zweiten Akkumulator zu verbinden oder zu trennen, um die Steifigkeit der Reduziereinheit einzustellen, wobei ein zweites Steuerventil (12) ferner zwischen dem zweiten Verbindungspunkt und dem Ölkanal angeordnet ist.

2. Hydraulische Federungsvorrichtung gemäß Anspruch 1, wobei die Flüssigkeitsspeichervorrichtung eine Steuerpumpe (26) und eine Flüssigkeitsspeichereinrichtung umfasst und die Steuerpumpe zwischen der Flüssigkeitsspeichereinrichtung und dem Ölkanal angeordnet ist.

3. Hydraulische Federungsvorrichtung gemäß Anspruch 1 oder 2, wobei sich ein oberes Ende der Kolbenstange aus dem Reduzierhgehäuse heraus erstreckt, am oberen Ende der Kolbenstange eine Ölöffnung ausgebildet ist und die Ölöffnung dazu konfiguriert ist, den Ölkanal und die Flüssigkeitsspeichervorrichtung miteinander zu verbinden.

4. Hydraulische Federungsvorrichtung gemäß Anspruch 2, die ferner einen Ölauslasskanal und einen Ölrücklaufkanal umfasst, wobei der Ölauslasskanal und der Ölrücklaufkanal beide zwischen der Flüssigkeitsspeichervorrichtung und dem Ölkanal (204) in Verbindung stehen, sich der Ölauslasskanal und der Ölrücklaufkanal teilweise überlappen und die Steuerpumpe am Ölauslasskanal angeordnet ist.

5. Hydraulische Federungsvorrichtung gemäß Anspruch 4, wobei der Ölauslasskanal einen gemeinsamen Kanal (33) und einen Ölauslasszweig (34) umfasst, der Ölrücklaufkanal den gemeinsamen Kanal und einen Ölrücklaufzweig umfasst, ein Ende des gemeinsamen Kanals mit dem Ölkanal in Verbindung steht und der Ölauslasszweig sowie der Ölrücklaufzweig beide mit dem anderen Ende des gemeinsamen Kanals in Verbindung stehen.

6. Hydraulische Federungsvorrichtung gemäß Anspruch 5, wobei ein Rückschlagventil (28) und die Steuerpumpe am Ölauslasszweig angeordnet sind, ein Ende des Rückschlagventils mit dem gemeinsamen Kanal in Verbindung steht, das andere Ende des Rückschlagventils mit der Steuerpumpe in Verbindung steht und ein Ölrücklaufventil am Ölrücklaufzweig angeordnet ist.

7. Hydraulische Federungsvorrichtung gemäß einem der vorstehenden Ansprüche, die ferner ein erstes Steuerventil umfasst, wobei das erste Steuerventil am Verbindungskanal angeordnet ist und dazu konfiguriert ist, die Verbindung oder Trennung zwischen der Flüssigkeitsspeichervorrichtung und dem Akkumulatormodul zu steuern.

8. Ein hydraulisches Federungssystem (1000), umfassend eine Steuereinheit und die hydraulische Federungsvorrichtung gemäß einem der Ansprüche 1 bis 7, dazu konfiguriert, die Strömungsrichtung des Öls zwischen der Flüssigkeitsspeichervorrichtung und dem Reduzierventil entsprechend dem Zustand eines Fahrzeugs zu steuern, um die Höhe der Fahrzeugkarosserie des Fahrzeugs zu erhöhen oder zu verringern.

9. Ein Fahrzeug, das das hydraulische Federungssystem (1000) gemäß Anspruch 8 umfasst.

## Revendications

1. Dispositif de suspension hydraulique, configuré pour ajuster la hauteur de la carrosserie d'un véhicule, comprenant :
un dispositif de stockage de liquide, ledit dispositif de stockage de liquide étant adapté pour être disposé sur la carrosserie du véhicule et étant configuré pour stocker de l'huile ; et
un réducteur (200), le réducteur comportant un boîtier de réducteur (201), un piston (202) et une tige de piston (203), le boîtier de réducteur étant adapté pour être relié à un essieu, le piston étant situé dans le boîtier de réducteur et ajusté au boîtier de réducteur pour définir une chambre supérieure (2011) et une chambre inférieure (2012), une extrémité de la tige de piston étant reliée au piston, la tige de piston étant adaptée pour être reliée à la carrosserie du véhicule, un canal d'huile (204) étant prévu dans la tige de piston, et le canal d'huile communiquant avec la chambre inférieure et le dispositif de stockage de liquide, afin de permettre à l'huile de s'écouler entre le dispositif de stockage de liquide et la chambre inférieure,
comprenant en outre un module d'accumulateur, le canal d'huile communiquant avec le dispositif de stockage de liquide par l'intermédiaire d'un canal de communication, le module d'accumulateur communiquant avec le canal de communication, et le module d'accumulateur étant adapté pour au moins ajuster au moins l'un parmi l'amortissement et la rigidité du réducteur et la hauteur de la carrosserie du véhicule,
dans lequel le module d'accumulateur comprend un premier accumulateur (9) et une vanne de réglage d'ouverture (8), le premier accumulateur communique avec le canal de communication en un premier point de communication, la soupape de réglage d'ouverture est disposée entre le premier point de communication et le canal d'huile, la soupape de réglage d'ouverture est configurée pour ajuster l'ouverture d'un canal de communication entre le canal d'huile et le premier point de communication, afin d'ajuster l'amortissement du réducteur, et la soupape de réglage d'ouverture est en outre configurée pour fermer un canal de communication entre le canal d'huile et le premier point de communication, afin d'ajuster la rigidité du réducteur.
dans lequel le module d'accumulateurs comprend en outre un deuxième accumulateur (10) et une vanne(11), de réglage de la rigidité un deuxième point de communication relié au deuxième accumulateur est disposé sur le canal de communication, la vanne de réglage de la rigidité est disposée entre le deuxième accumulateur et le deuxième point de communication, et la vanne de réglage de la rigidité est configurée pour relier ou séparer le canal de communication et le deuxième accumulateur afin d'ajuster la rigidité du réducteur, dans lequel une deuxième vanne de commande (12) est en outre disposée entre le deuxième point de communication et le canal d'huile .

2. Dispositif de suspension hydraulique selon la revendication 1, dans lequel le dispositif de stockage de liquide comprend une pompe de commande (26) et un dispositif de stockage de liquide, et la pompe de commande est disposée entre le dispositif de stockage de liquide et le canal d'huile.

3. Dispositif de suspension hydraulique selon la revendication 1 ou 2, dans lequel une extrémité supérieure de la tige de piston s'étend hors du boîtier du réducteur, un orifice d'huile est formé à l'extrémité supérieure de la tige de piston, et l'orifice d'huile est configuré pour faire communiquer le canal d'huile et le dispositif de stockage de liquide.

4. Dispositif de suspension hydraulique selon la revendication 2, comprenant en outre un canal de sortie d'huile et un canal de retour d'huile, le canal de sortie d'huile et le canal de retour d'huile communiquant tous deux entre le dispositif de stockage de liquide et le canal d'huile (204), le canal de sortie d'huile et le canal de retour d'huile se chevauchant partiellement, et la pompe de commande étant disposée sur le canal de sortie d'huile.

5. Dispositif de suspension hydraulique selon la revendication 4, dans lequel le canal de sortie d'huile comprend un canal commun (33) et une branche de sortie d'huile (34), le canal de retour d'huile comprend le canal commun et une branche de retour d'huile, une extrémité du canal commun communique avec le canal d'huile, et la branche de sortie d'huile et la branche de retour d'huile communiquent toutes deux avec l'autre extrémité du canal commun.

6. Dispositif de suspension hydraulique selon la revendication 5, dans lequel un clapet anti-retour (28) et la pompe de commande sont disposés sur la branche de sortie d'huile, une extrémité du clapet anti-retour communique avec le canal commun, l'autre extrémité du clapet anti-retour communique avec la pompe de commande, et une vanne de retour d'huile est disposée sur la branche de retour d'huile.

7. Dispositif de suspension hydraulique selon l'une quelconque des revendications précédentes, comprenant en outre une première vanne de commande, laquelle est disposée sur le canal de communication et est configurée pour commander la communication ou la séparation entre le dispositif de stockage de liquide et le module d'accumulateur.

8. Système de suspension hydraulique (1000), comprenant un contrôleur et le dispositif de suspension hydraulique selon l'une quelconque des revendications 1 à 7, le contrôleur étant configuré pour commander le sens d'écoulement de l'huile entre le dispositif de stockage de liquide et le réducteur selon l'état d'un véhicule, afin d'augmenter ou de réduire la hauteur de la carrosserie du véhicule.

9. Véhicule comprenant le système de suspension hydraulique (1000) selon la revendication 8.
